# EUROPEAN PATENT APPLICATION

(11) **EP 4 576 687 A1**
(43) Date of publication of application: **25.06.2025**
(21) Application number: 22955231.0
(22) Date of filing: 15.08.2022
(51) Int. Cl.: H04L 27/00

(54) **DATA TRANSMISSION METHODS AND APPARATUS, STORAGE MEDIUM, AND CHIP**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/112588
(87) International publication number: WO 2024/036449

(57) **Abstract**

The present disclosure relates to data transmission methods and apparatus, a storage medium, and a chip. A method comprises: a first terminal determining at least one piece of first data identification information among a plurality of pieces of data identification information to be determined; according to the first data identification information and sidelink data to be sent, generating a first protocol data unit (PDU); and sending to a relay terminal the first PDU, wherein the first data identification information is used for instructing the relay terminal to send sidelink data to a second terminal according to the first data identification information. In this way, the first terminal can flexibly determine the first data identification information, and generate the first PDU according to the first data identification information, thereby meeting the needs of U2U relay communication in different scenarios.

## Description

### TECHNICAL FIELD

The disclosure relates to the field of communication technologies, and particularly to a method and an apparatus for transmitting data, a storage medium and a chip.

### BACKGROUND

With development of a wireless communication technology, in order to achieve direct communication between terminals, a 3rd generation partnership project (3GPP) defines a sidelink (also called a direct link or a bypass link) communication way. For example, a typical application scenario of a sidelink communication is Vehicle-to-Everything (V2X). In the V2X, each vehicle is taken as a terminal, and the terminals may communicate with each other by the sidelink, such as transmitting information in a sidelink way, thus effectively reducing a communication delay.

When there is a far distance between two terminals for performing the sidelink communication, communication may be performed by a relay terminal (such as a relay UE). Such communication may be called user equipment (UE)-to-UE (U2U) relay communication.

In the related art, a protocol data unit (PDU) structure used in the sidelink communication is relatively simple, which is difficult to adapt to a complex U2U relay communication scenario.

### SUMMARY

To overcome the above problems in the related art, the disclosure provides a method and an apparatus for transmitting data, a storage medium and a chip.

According to a first aspect of embodiments of the disclosure, there is provided a method for transmitting data, applied to a first user equipment (UE), including:
determining at least one piece of first data identifier information from multiple pieces of pending data identifier information;
generating a first protocol data unit (PDU) based on the piece of first data identifier information and sidelink data to be sent; and
sending the first PDU to a relay UE, in which the piece of first data identifier information is used to indicate the relay UE to send the sidelink data to a second UE based on the piece of first data identifier information.

According to a second aspect of embodiments of the disclosure, there is provided a method for transmitting data, applied to a relay user equipment (UE), including:
receiving a first PDU sent by a first UE, in which the first PDU includes sidelink data and at least one piece of first data identifier information; the piece of first data identifier information is information determined by the first UE from multiple pieces of pending data identifier information; and
sending the sidelink data to a second UE based on the piece of first data identifier information in the first PDU.

According to a third aspect of embodiments of the disclosure, there is provided a method for transmitting data, applied to a second user equipment (UE), including:
receiving a second PDU sent by a relay UE; the second PDU including sidelink data and second data identifier information, a piece of second data identifier information being determined by the relay UE based on a piece of first data identifier information in a first PDU received from a first UE, and the piece of first data identifier information being information determined by the first UE from multiple pieces of pending data identifier information; and
obtaining the sidelink data based on the second data identifier information.

According to a fourth aspect of embodiments of the disclosure, there is provided a method for transmitting data, applied to a network device, including:
determining a first relationship parameter corresponding to a first user equipment (UE); and
sending the first relationship parameter to a target UE; the first relationship parameter being used to indicate the first UE to determine a first corresponding relationship, to determine a first sidelink-radio link control (SL-RLC) entity corresponding to a second bearer type of sidelink data to be sent based on the first corresponding relationship, and to send the sidelink data to a relay UE by the first SL-RLC entity; and the target UE including one or more of the first UE, a second UE and the relay UE.

According to a fifth aspect of embodiments of the disclosure, there is provided an apparatus for transmitting data, applied to a first user equipment (UE), including:
a first determining module, configured to determine at least one piece of first data identifier information from multiple pieces of pending data identifier information;
a first generating module, configured to generate a first PDU based on the piece of first data identifier information and sidelink data to be sent; and
a first sending module, configured to send the first PDU to a relay UE, in which the piece of first data identifier information is used to indicate the relay UE to send the sidelink data to a second UE based on the piece of first data identifier information.

According to a sixth aspect of embodiments of the disclosure, there is provided an apparatus for transmitting data, applied to a relay user equipment (UE), including:
a relay receiving module, configured to receive a first PDU sent by a first UE, in which the first PDU includes sidelink data and at least one piece of first data identifier information, and the piece of first data identifier information is information determined by the first UE from multiple pieces of pending data identifier information; and
a relay sending module, configured to send the sidelink data to a second UE based on the piece of first data identifier information in the first PDU.

According to a seventh aspect of embodiments of the disclosure, there is provided an apparatus for transmitting data, applied to a second user equipment (UE), including:
a second receiving module, configured to receive a second PDU sent by a relay UE; the second PDU including sidelink data and second data identifier information, a piece of second data identifier information being determined by the relay UE based on a piece of first data identifier information in a first PDU received from a first UE, and the piece of first data identifier information being determined by the first UE from multiple pieces of pending data identifier information; and
a second obtaining module, configured to obtain the sidelink data based on the second data identifier information.

According to an eighth aspect of embodiments of the disclosure, there is provided an apparatus for transmitting data, applied to a network device, including:
a network determining module, configured to determine a first relationship parameter corresponding to a first user equipment (UE); and
a network sending module, configured to send the first relationship parameter to a target UE; the first relationship parameter being used to indicate the first UE to determine a first corresponding relationship, to determine a first SL-RLC entity corresponding to a second bearer type of sidelink data to be sent based on the first corresponding relationship, and to send the sidelink data to a relay UE by the first SL-RLC entity; and the target UE including one or more of the first UE, a second UE and the relay UE.

According to a ninth aspect of embodiments of the disclosure, there is provided a device for transmitting data, including:
a processor; and
a memory for storing instructions executable by the processor.

The processor is configured to implement steps of the method for transmitting data in the first aspect of the disclosure.

According to a tenth aspect of embodiments of the disclosure, there is provided a device for transmitting data, including:
a processor; and
a memory for storing instructions executable by the processor.

The processor is configured to implement steps of the method for transmitting data in the second aspect of the disclosure.

According to an eleventh aspect of embodiments of the disclosure, there is provided a device for transmitting data, including:
a processor; and
a memory for storing instructions executable by the processor.

The processor is configured to implement steps of the method for transmitting data in the third aspect of the disclosure.

According to a twelfth aspect of embodiments of the disclosure, there is provided a device for transmitting data, including:
a processor; and
a memory for storing instructions executable by the processor.

The processor is configured to implement steps of the method for transmitting data in the fourth aspect of the disclosure.

According to a thirteen aspect of embodiments of the disclosure, there is provided a computer readable storage medium, on which computer program instructions are stored. When the computer program instructions are executed by a processor, steps of the method for transmitting data in the first aspect of the disclosure are implemented.

According to a fourteenth aspect of embodiments of the disclosure, there is provided a computer readable storage medium, on which computer program instructions are stored. When the computer program instructions are executed by a processor, steps of the method for transmitting data in the second aspect of the disclosure are implemented.

According to a fifteenth aspect of embodiments of the disclosure, there is provided a computer readable storage medium, on which computer program instructions are stored. When the computer program instructions are executed by a processor, steps of the method for transmitting data in the third aspect of the disclosure are implemented.

According to a sixteenth aspect of embodiments of the disclosure, there is provided a computer readable storage medium, on which computer program instructions are stored. When the computer program instructions are executed by a processor, steps of the method for transmitting data in the fourth aspect of the disclosure are implemented.

According to a seventeenth aspect of embodiments of the disclosure, there is provided a chip, including a processor and an interface. The processor is configured to read instructions to implement steps of the method for transmitting data in the first aspect of the disclosure.

According to an eighteenth aspect of embodiments of the disclosure, there is provided a chip, including a processor and an interface. The processor is configured to read instructions to implement steps of the method for transmitting data in the second aspect of the disclosure.

According to a nineteenth aspect of embodiments of the disclosure, there is provided a chip, including a processor and an interface. The processor is configured to read instructions to implement steps of the method for transmitting data in the third aspect of the disclosure.

According to a twentieth aspect of embodiments of the disclosure, there is provided a chip, including a processor and an interface. The processor is configured to read instructions to implement steps of the method for transmitting data in the fourth aspect of the disclosure.

The technical solution in embodiments of the disclosure may include following beneficial effects. The first UE may determine the at least one piece of first data identifier information from the multiple pieces of pending data identifier information; generate the first PDU based on the piece of first data identifier information and the sidelink data to be sent; and send the first PDU to the relay UE. The piece of first data identifier information is used to indicate the relay UE to send the sidelink data to the second UE based on the first data identifier. In this way, the first UE may flexibly determine the piece of first data identifier information and generate the first PDU based on the piece of first data identifier information, thus meeting requirements of the UE-to-UE (U2U) relay communication in different scenarios.

It may be understood that a general description above and a detailed description below are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and serve to explain the principles of the disclosure, together with the specification.
FIG. 1 is a schematic diagram illustrating a communication system according to an exemplary embodiment.
FIG. 2 is a flow chart illustrating a method for transmitting data according to an exemplary embodiment.
FIG. 3 is a schematic diagram illustrating a protocol data unit (PDU) format according to embodiments of the disclosure.
FIG. 4 is a flow chart illustrating a method for transmitting data according to an exemplary embodiment.
FIG. 5 is a flow chart illustrating a method for transmitting data according to an exemplary embodiment.
FIG. 6 is a flow chart illustrating a method for transmitting data according to an exemplary embodiment.
FIG. 7 is a flow chart illustrating a method for transmitting data according to an exemplary embodiment.
FIG. 8 is a flow chart illustrating a method for transmitting data according to an exemplary embodiment.
FIG. 9 is a flow chart illustrating a method for transmitting data according to an exemplary embodiment.
FIG. 10 is a flow chart illustrating a method for transmitting data according to an exemplary embodiment.
FIG. 11 is a flow chart illustrating a method for transmitting data according to an exemplary embodiment.
FIG. 12 is a flow chart illustrating a method for transmitting data according to an exemplary embodiment.
FIG. 13 is a flow chart illustrating a method for transmitting data according to an exemplary embodiment.
FIG. 14 is a flow chart illustrating a method for transmitting data according to an exemplary embodiment.
FIG. 15 is a flow chart illustrating a method for transmitting data according to an exemplary embodiment.
FIG. 16 is a flow chart illustrating a method for transmitting data according to an exemplary embodiment.
FIG. 17 is a flow chart illustrating a method for transmitting data according to an exemplary embodiment.
FIG. 18 is a block diagram illustrating an apparatus for transmitting data according to an exemplary embodiment.
FIG. 19 is a block diagram illustrating an apparatus for transmitting data according to an exemplary embodiment.
FIG. 20 is a block diagram illustrating an apparatus for transmitting data according to an exemplary embodiment.
FIG. 21 is a block diagram illustrating an apparatus for transmitting data according to an exemplary embodiment.
FIG. 22 is a block diagram illustrating an apparatus for transmitting data according to an exemplary embodiment.
FIG. 23 is a block diagram illustrating an apparatus for transmitting data according to an exemplary embodiment.
FIG. 24 is a block diagram illustrating an apparatus for transmitting data according to an exemplary embodiment.
FIG. 25 is a block diagram illustrating an apparatus for transmitting data according to an exemplary embodiment.

### DETAILED DESCRIPTION

Reference will now be made in detail to exemplary embodiments, examples of which are illustrated in the accompanying drawings. The following description refers to the accompanying drawings in which same numbers in different accompanying drawings represent same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

It should be noted that all actions for obtaining signals, information or data in the disclosure are performed in accordance with relevant data protection regulations and policies of the country, and with authorization of an owner of a corresponding device.

In a description of the disclosure, terms such as "first", "second", etc. are used to distinguish similar objects and are not necessarily understood as a particular order or precedence. In addition, in the description of the accompanying drawings, the same label in different accompanying drawings represents the same element unless otherwise represented.

In the description of the disclosure, unless otherwise represented, "a/the plurality of" means two or more, and other quantifiers means the same; and "at least one", "one or more" or similar expressions means any combination of these items, including any combination of one or more items. For example, at least one "a" may represent any number of "a". For another example, one or more of "a", "b" and "c" may be expressed as: "a", "b", "c", "a"-"b", "a"-"c", "b-"c", or "a"-"b"-"c", in which "a", "b", and "c" may be in a singular form or a plural form. "And/or" is an association relationship that describes associated objects, indicating three kinds of relationships. For example, A and/or B may represent: A alone, both A and B at the same time, and B alone, in which A and B may be in a singular form or a plural form.

In embodiments of the disclosure, although operations or steps are described in a particular order in the accompanying drawings, it should not be understood as requiring that these operations or steps are performed in the illustrated particular order or in a serial order, or requiring that all the operations or steps illustrated are performed in order to obtain a desirable result. In embodiments of the disclosure, these operations or steps may be performed in a serial order; these operations or steps may be performed in parallel; or some of these actions or steps may be performed.

An implementation environment of embodiments of the disclosure is first described below.

The technical solution of embodiments of the disclosure may be applied to various communication systems. The communication system may include one or more of a 4G (the 4th generation) communication system, a 5G (the 5th generation) communication system, and other future wireless communication systems (such as 6G). The communication system may also include one or more of a public land mobile network (PLMN), a device-to-device (D2D) communication system, a machine to machine (M2M) communication system, an Internet of Things (IoT) communication system, a Vehicle-to-Everything (V2X) communication system, or other communication systems.

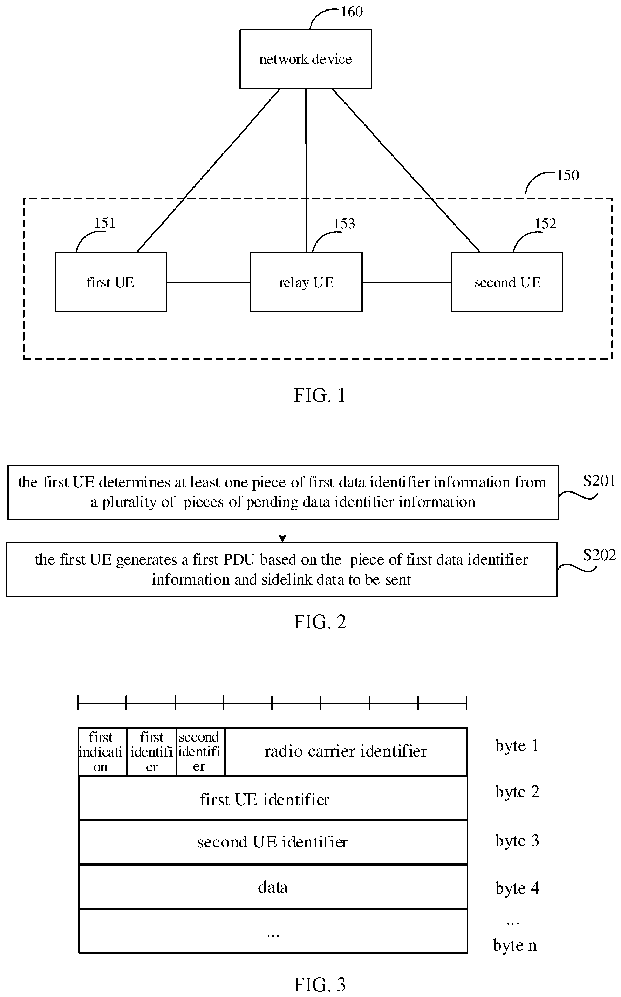

FIG. 1 is a schematic diagram illustrating a communication system according to an exemplary embodiment. As illustrated in FIG. 1, the communication system may include a terminal 150 and a network device 160. The communication system may be configured to support a 4G network access technology, such as a long term evolution (LTE) access technology, or 5G network access technology, such as new radio access technology (New RAT), or other future wireless communication technologies. It should be noted that there may be one or more network devices and terminals in the communication system. The number of network devices and terminals in the communication system illustrated in FIG. 1 is only an adaptive example, which is not limited in the disclosure.

The network device in FIG. 1 may be configured to support the terminal to access, for example, the network device may be an evolutional NodeB (eNB or eNodeB) in an LTE; the network device may also be a next Generation NodeB (gNB or gNodeB) in a 5G network; the network device may also be an NG radio access network (NG-RAN) device in the 5G network; the network device may also be a base station of the PLMN in a future evolution, a broadband network gateway (BNG), an aggregation switch, or a non-3rd generation partnership project access device; or the like. Alternatively, the network device in embodiments of the disclosure may include various forms of base stations, such as: a macro site, a micro site (also called small cell), a relay station, an access point, a 5G base station or a future base station, a satellite, a transmitting and receiving point (TRP), a transmitting point (TP), a mobile switching center, a D2D device, a machine-to-machine (M2M) device, an IoT device, a V2X device, or other devices that perform a base station function in the communication, which is not limited in embodiments of the disclosure. For convenience of description, in all embodiments of the disclosure, devices providing a wireless communication function for terminals are collectively referred to as network device or base station.

The terminal in FIG. 1 may be an electronic device for providing speech or data connectivity. For example, the terminal may also be called a user equipment (UE), a subscriber unit, a mobile station, a station, a terminal, etc. For example, the terminal may include a smartphone, a smart wearable device, a smart speaker, a smart tablet, a wireless modem, a wireless local loop (WLL) station, a personal digital assistant (PDA), and a customer premise equipment (CPE), etc. With development of a wireless communication technology, the terminal may access the communication system, communicate with the network device of the communication system, or communicate with other objects by the communication system. Alternatively, two or more devices communicating with each other directly may be the terminal in embodiments of the disclosure. For example, a terminal and a car in an intelligent transportation, a household device in a smart home, a power meter reading instrument in a smart grid, a voltage monitoring instrument, an environmental monitoring instrument, a video monitoring instrument in an intelligent secure network, a cash register, etc. In embodiments of the disclosure, the terminal may communicate with the network device; multiple terminals may also communicate with each other; and multiple network devices may also communicate with each other. The terminal may be statically fixed or mobile, which is not limited in the disclosure.

In some embodiments, as illustrated in FIG. 1, the terminal 150 may include a first UE 151, a second UE 152, and a relay UE 153. The first UE 151 and the second UE 152 may not be directly linked but communicate by the relay UE 153. The relay UE 153 may provide a relay function for communication between the first UE 151 and the second UE 152, such as forwarding communication data. A communication way may be called a user equipment (UE)-to-UE (U2U) relay communication. In the U2U relay communication, the communication way between multiple terminals may include a unicast way, a multicast way, or a broadcast way. For example, the first UE may send sidelink data to the relay UE in the unicast way, and then the relay UE may forward the sidelink data to the second UE in the unicast way. In this case, the first UE may be called a source remote UE, and the relay UE may be called a relay UE, and the second UE may be called a target remote UE.

The first UE maintains a unicast connection with the second UE by the relay UE, called a sidelink (indirect link), and the first UE directly maintains a unicast connection with the second UE, called a sidelink (direct link).

In this embodiment, the first UE may be connected to the network device; or may not be connected to the network device, but connected to the network device by the relay UE 153 or another UE providing the relay function. Similarly, the second UE may be connected to the network device; or may not be connected to the network device, but connected to the network device by the relay UE 153 or another UE providing the relay function, which is not limited in the disclosure.

It should be noted that, in the case that a physical UE provides the relay function, the physical UE may serve as the relay UE. In the case that the physical UE communicates with another UE by another relay UE, the physical UE may serve as the first UE or the second UE above. That is, the same physical UE may be taken as the relay UE in one U2U link, the first UE (such as a data sending end) in another U2U link, or the second UE (such as a data receiving end) in another U2U link. Of course, the physical UE may also only provide the relay function (that is, only taken as the relay UE), or only provide a common sidelink communication function (that is, only taken as the first UE or the second UE), which is not limited in the disclosure.

In other embodiments, the above UE may also include a third UE and a fourth UE. The third UE may not be directly connected to the network device, but communicate with the network device by the fourth UE. The fourth UE may provide the relay function for communication between the third UE and the network device, such as forwarding the communication data. Such communication way may be called UE to NW (U2W) relay communication.

In a U2W relay communication scenario, the third UE may be called a remote UE or a remote UE, and the fourth UE may be called a U2W relay UE. When the third UE sends data to the fourth UE, a sidelink relay adaptation protocol (SRAP) entity of the third UE may add an SRAP header to a received SRAP service data unit (SDU). The SRAP header may include a UE identifier and a bearer identifier of the third UE. The UE identifier of the third UE may be configured by the network device to the third UE and the fourth UE. For one or more third UEs connected to the fourth UE, UE identifiers corresponding to respective third UEs may be different. In this way, one third UE may be uniquely identified by the UE identifier. The bearer identifier may be used to identify which bearer the SRAP SDU comes from. Then, the third UE may send the SRAP PDU to a corresponding sidelink-radio link control (SL-RLC) based on a corresponding relationship between the bearer and the SL-RLC, and then transmit the SRAP PDU to the fourth UE by the SL-RLC. The corresponding relationship between the bearer and the SL-RLC is configured by a network.

After the SRAP PDU is received, the fourth UE decides to send the received SRAP PDU to a corresponding uplink RLC based on a corresponding relationship between a bearer and an uplink RLC corresponding to the third UE, and then sends the received SRAP PDU to the network device. The corresponding relationship between the bearer and the uplink RLC corresponding to the third UE may be configured by the network device. Different corresponding relationships may be configured for different third UEs.

In the related art, the SRAP PDU has a simple structure, which is difficult to adapt to a complex U2U relay communication scenario.

To solve above problems, the disclosure provides a method and an apparatus for transmitting data, a storage medium and a chip.

FIG. 2 is a flow chart illustrating a method for transmitting data according to an exemplary embodiment. The method may be applied to a first UE in the communication system. As illustrated in FIG. 2, the method may include the following.

At S201, the first UE determines at least one piece of first data identifier information from multiple pieces of pending data identifier information.

In some embodiments, the pending data identifier information includes one or more of following identifiers.

Identifier 1: a first UE identifier of the first UE.

The first UE identifier may be a temporary identifier or a local identifier of the first UE, and may be used to uniquely identify one UE in one or more UEs connected to the relay UE.

Identifier 2: a second UE identifier of a second UE.

Similarly, the second UE identifier may be a temporary identifier or a local identifier of the second UE, and may be used to uniquely identify one UE in one or more UEs connected to the relay UE.

Identifier 3: a radio bearer identifier corresponding to the sidelink data.

For example, the radio bearer identifier may be used to represent a radio bearer which the sidelink data comes from. The radio bearer may include a signaling radio bearer (SRB) and a data radio bearer (DRB).

In some embodiments, the first UE identifier and the second UE identifier described above may come from identifiers assigned by the relay UE, for example:

**the** first UE may obtain the first UE identifier and/or the second UE identifier in response to receiving an identifier parameter sent by the relay UE, in which the identifier parameter includes the first UE identifier and/or the second UE identifier.

The piece of first data identifier information may include any one or more identifiers selected from the above three identifiers.

At S202, the first UE generates a first PDU based on the piece of first data identifier information and sidelink data to be sent.

In some embodiments, the sidelink data may be data from a sidelink-data radio bearer (SL-DRB) and/or a sidelink signaling radio bearer (SL SRB).

**In** some embodiments, the first PDU may carry the piece of first data identifier information and the sidelink data.

In some embodiments, the first PDU may also include a first identifier and/or a second identifier, for example:
the first PDU is generated based on the piece of first data identifier information, the sidelink data and the first identifier in the case that the piece of first data identifier information includes the first UE identifier, that is, the first PDU carries the piece of first data identifier information, the sidelink data, and the first identifier, in which the first identifier is used to represent that the piece of first data identifier information includes the first UE identifier.

In the case that the piece of first data identifier information includes the second UE identifier, the first PDU is generated based on the piece of first data identifier information, the sidelink data and the second identifier, that is, the first PDU carries the piece of first data identifier information, the sidelink data and the second identifier, in which the second identifier is used to represent that the piece of first data identifier information includes the second UE identifier.

In the case that the piece of first data identifier information includes the first UE identifier and the second UE identifier, the first PDU is generated based on the piece of first data identifier information, the sidelink data, the first identifier and the second identifier, that is, the first PDU carries the piece of first data identifier information, the sidelink data, the first identifier, and the second identifier. The first identifier may be used to represent that the piece of first data identifier information includes the first UE identifier, and the second identifier may be used to represent that the piece of first data identifier information includes the second UE identifier.

In this way, it may be flexibly indicated by the first identifier whether the first PDU carries the first UE identifier, and it may be flexibly indicated by the second identifier whether the first PDU carries the second UE identifier, thus further improving flexibility of data transmission and meeting requirements of the U2U relay communication in different scenarios.

At S203, the first UE sends the first PDU to a relay UE.

The first data identifier is used to indicate the relay UE to send the sidelink data to the second UE based on the first data identifier. In this way, the first UE may communicate with the second UE by the relay UE.

With the above method, the first UE may determine the at least one piece of first data identifier information from the multiple pieces of pending data identifier information; generate the first PDU based on the piece of first data identifier information and the sidelink data to be sent; and send the first PDU to the relay UE, in which the piece of first data identifier information is used to indicate the relay UE to send the sidelink data to the second UE based on the piece of first data identifier information. In this way, the first UE may flexibly determine the piece of first data identifier information and generate the first PDU based on the piece of first data identifier information, thus meeting the requirements of the U2U relay communication in different scenarios.

In some embodiments of the disclosure, the first PDU may be an SRAP PDU. The first PDU may include SRAP header information and the sidelink data, and the SRAP header information may include the above first data identifier information. The first PDU may be in one or more formats, and the SRAP header information of the first PDU in different formats may include different types of first data identifier information.

For example, when the first UE sends the sidelink data to the second UE by the relay UE, the first PDU may be generated based on the sidelink data and the SRAP header information, and the first PDU is sent to the relay UE. The first PDU may be the SRAP PDU. The SRAP header information may include one or more of the first UE identifier, the second UE identifier, and the radio bearer identifier.

FIG. 3 is a schematic diagram illustrating a PDU format according to embodiments of the disclosure. As illustrated in FIG. 3, the PDU format may be a format corresponding to the first PDU. The PDU format may include SRAP header information 301 and data 302. The data 302 may be the sidelink data. The SRAP header may include one or more of the first UE identifier, the second UE identifier, the radio bearer identifier, a first indication, and a second indication as described above. In addition, the SRAP header may also include the first indication. The first indication may be a D/C indication, in which the D/C indication is used to indicate whether the sidelink data carried by the first PDU is service data or control data. It should be noted that the sidelink data in the disclosure may any one of the service data or the control data.

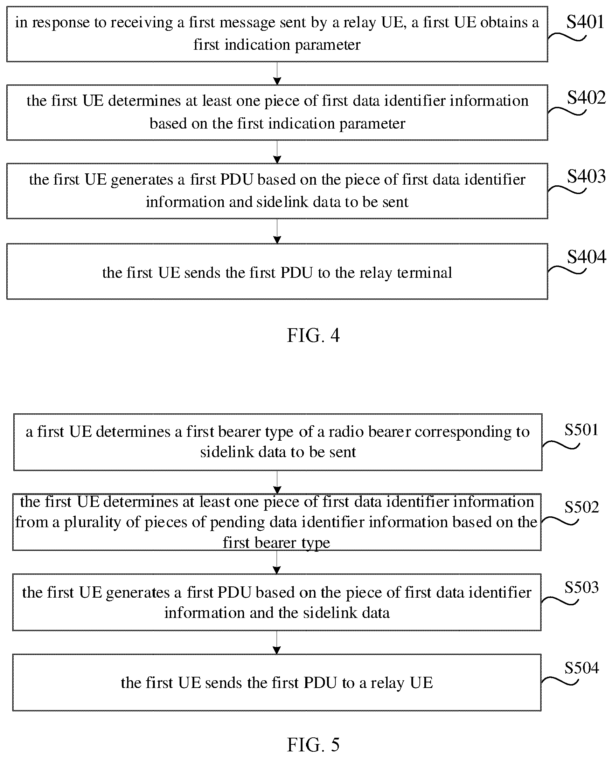

FIG. 4 is a flow chart illustrating a method for transmitting data according to an exemplary embodiment. As illustrated in FIG. 4, the method may include the following.

At S401, a first UE obtains a first indication parameter in response to receiving a first message sent by a relay UE.

The first message includes the first indication parameter.

In some embodiments, the first message may include one or more of a sidelink radio resource control (RRC) message, a sidelink medium access control control element (MAC CE), and sidelink control information (SCI). The sidelink RRC message may be a sidelink system message, or the sidelink RRC message may be a sidelink RRC message dedicated to the terminal, such as, a sidelink RRC reconfiguration message.

At S402, the first UE determines at least one piece of first data identifier information based on the first indication parameter.

The piece of first data identifier information may include one or more of a first UE identifier, a second UE identifier, and a radio bearer identifier.

Different first indication parameters may represent that the piece of first data identifier information is combined by different identifiers. For example:
in the case that the first indication parameter is a first preset value, the first UE identifier may be taken as the piece of first data identifier information; or,
in the case that the first indication parameter is a second preset value, the second UE identifier may be taken as the piece of first data identifier information; or,
in the case that the first indication parameter is a third preset value, the radio bearer identifier may be taken as the piece of first data identifier information; or,
in the case that the first indication parameter is a fourth preset value, the first UE identifier and the second UE identifier may be taken as the piece of first data identifier information; or,
in the case that the first indication parameter is a fifth preset value, the first UE identifier and the radio bearer identifier may be taken as the piece of first data identifier information; or,
in the case that the first indication parameter is a sixth preset value, the second UE identifier and the radio bearer identifier may be taken as the piece of first data identifier information; or,
in the case that the first indication parameter is a seventh preset value, the first UE identifier, the second UE identifier and the radio bearer identifier may be taken as the piece of first data identifier information.

In some embodiments, the first message may include the first indication parameter. The first UE may determine the at least one piece of first data identifier information from the multiple pieces of pending data identifier information based on the first indication parameter.

For example, the first indication parameter may include three identifier bits, each identifier bit corresponds to a target identifier (the target identifier may be one of the first UE identifier, the second UE identifier, and the radio bearer identifier above). In the case that one identifier bit is a preset target value, the piece of first data identifier information includes a target identifier corresponding to the identifier bit. For example, the first indication parameter may include a first identifier bit, a second identifier bit and a third identifier bit. The first identifier bit corresponds to the first UE identifier, the second identifier corresponds to the second UE identifier, and the third identifier corresponds to the radio bearer identifier. In this way, in the case that the first identifier bit is the preset target value, the piece of first data identifier information may include the first UE identifier; in the case that the second identifier bit is the preset target value, the piece of first data identifier information may include the second UE identifier; in the case that the third identifier bit is the preset target value, the piece of first data identifier information may include the radio bearer identifier; and in the case that all the three identifier bits are the preset target values, the piece of first data identifier information may include the first UE identifier, the second UE identifier and the radio bearer identifier.

In other embodiments, the first message may include the first indication parameter and a pending UE identifier. In this way, the first UE may first determine the second UE identifier of the second UE receiving the sidelink data; then the at least one piece of first data identifier information is determined from the multiple pieces of pending data identifier information based on the first indication parameter in the case that the second UE identifier is same as the pending UE identifier.

In this embodiment, the first message may include one or more pending UE identifiers, and different pending UE identifiers may correspond to different first indication parameters, such that different pieces of first data identifier information may be set based on different target UEs. Of course, different pieces of pending UE identifiers may also correspond to the same first indication parameter, such that the same first data identifier information is used for multiple pending terminals, thus saving the number of parameters in the first message.

At S403, the first UE generates a first PDU based on the piece of first data identifier information and sidelink data to be sent.

Detailed content that the first UE generates the first PDU based on the piece of first data identifier information and the sidelink data to be sent is the same as that in the above embodiments, which is not repeated here.

At S404, the first UE sends the first PDU to the relay UE.

With the above method, the first UE may determine the piece of first data identifier information based on the first indication parameter in the first message sent by the relay UE, generate the first PDU based on the piece of first data identifier information and the sidelink data to be sent, and send the first PDU to the relay UE. In this way, the piece of first data identifier information may be flexibly determined based on the first indication parameter, thus meeting requirements of the U2U relay communication in different scenarios.

FIG. 5 is a flow chart illustrating a method for transmitting data according to an exemplary embodiment. As illustrated in FIG. 5, the method may include the following.

At S501, a first UE determines a first bearer type of a radio bearer corresponding to sidelink data to be sent.

The first bearer type may include an SRB and/or a DRB.

In some embodiments, the first bearer type may include one or more of an SL SRB0, an SL SRB1, an SL SRB2, an SL SRB3, and the DRB.

At S502, the first UE determines at least one piece of first data identifier information from multiple pieces of pending data identifier information based on the first bearer type.

In some embodiments, the piece of first data identifier information may be determined in the case that the first bearer type is a first preset bearer type. The piece of first data identifier information may include a first UE identifier and the second UE identifier.

The piece of first data identifier information may not include the radio bearer identifier, or the radio bearer identifier may be set as a preset bearer identifier. For example, the preset bearer identifier may be a maximum value or a minimum value of the radio bearer identifier, for example, all bits are 0, or all bits are 1.

The first preset bearer type may be a preset SRB or a preset DRB. For example, the first preset bearer type may be the SL SRB0, the SL SRB1, the SL SRB2 or the SL SRB3.

In some embodiments, different first bearer types may correspond to different pieces of first data identifier information. In other embodiments, different first bearer types may also correspond to the same first data identifier information.

At S503, the first UE generates a first PDU based on the piece of first data identifier information and the sidelink data.

Detailed content that the first UE generates the first PDU based on the piece of first data identifier information and the sidelink data to be sent is the same as that in the above embodiments, which is not repeated here.

At S504, the first UE sends the first PDU to a relay UE.

With the above method, the first UE may determine the piece of first data identifier information based on the first bearer type of the radio bearer corresponding to the sidelink data to be sent, and generate the first PDU based on the piece of first data identifier information and the sidelink data to be sent; and send the first PDU to the relay UE. In this way, the piece of first data identifier information may be flexibly determined based on the first bearer type, thus meeting requirements of the U2U relay communication in different scenarios.

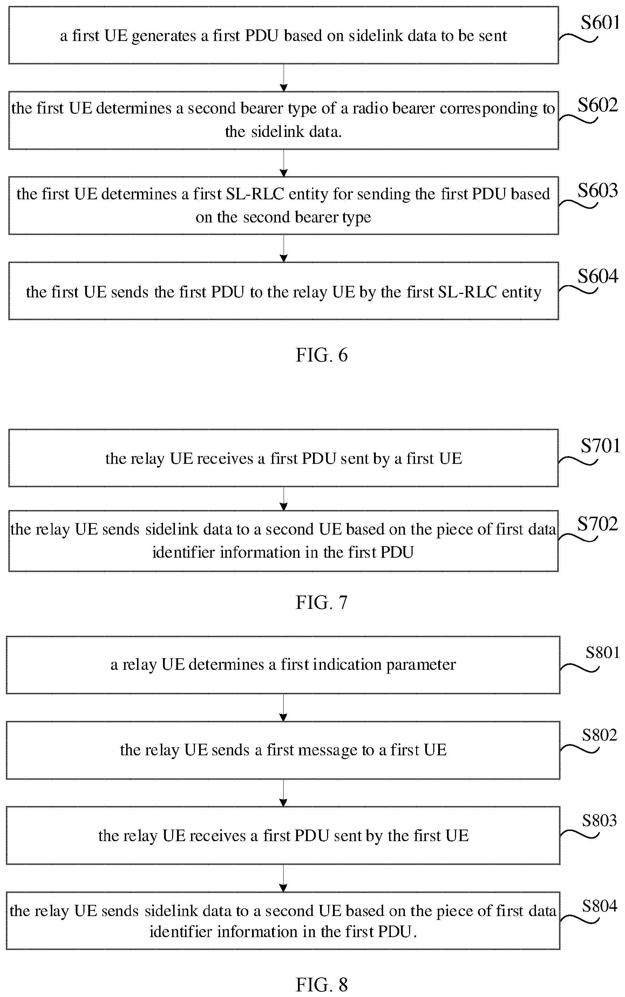

FIG. 6 is a flow chart illustrating a method for transmitting data according to an exemplary embodiment. As illustrated in FIG. 6, the method may include the following.

At S601, a first UE generates a first PDU based on sidelink data to be sent.

In some embodiments, the first UE may generate the first PDU based on a preset PDU format. The preset PDU format may be any preset format, such as a PDU format determined in a communication protocol. The preset PDU format may include an SRAP header and the sidelink data.

In some embodiments, the first UE may determine at least one piece of first data identifier information from multiple pieces of pending data identifier information; and generate the first PDU based on the piece of first data identifier information and the sidelink data to be sent.

At S602, the first UE determines a second bearer type of a radio bearer corresponding to the sidelink data.

The second bearer type may be a radio bearer type that sends the sidelink data. The second bearer type may be the same as or different from the above first bearer type. The second bearer type may include an SRB and/or a DRB. For example, the second bearer type may include one or more of an SL SRB0, an SL SRB1, an SL SRB2, an SL SRB3, and the DRB.

At S603, the first UE determines a first SL-RLC entity for sending the first PDU based on the second bearer type.

At S604, the first UE sends the first PDU to the relay UE by the first SL-RLC entity.

It should be noted that different SL-RLC entities may correspond to different security policies or reliability policies, for example, some SL-RCL entities are cleartext transmission, and some SL-RLC entities are encrypted transmission; some SL-RLC entities are reliable transmission based on an acknowledged mode (AM); some SL-RLC entities are unreliable transmission based on an unacknowledged mode (UM); and some SL-RLC entities are transmission based on a transparent mode (TM).

In this way, the first UE may determine the first SL-RLC entity for sending the first PDU based on the second bearer type of the radio bearer corresponding to the sidelink data, and send the first PDU to the relay UE by the first SL-RLC entity, thus meeting a requirement of reliability or security of data transmission.

In one implementation of the above S603, the first UE may obtain a first corresponding relationship, and determine the first SL-RLC entity corresponding to the second bearer type based on the first corresponding relationship, in which the first corresponding relationship includes a corresponding relationship between the second bearer type and the first SL-RLC entity.

In some embodiments, the first UE may receive a first relationship parameter sent by a network device or the relay UE, and determine the first corresponding relationship based on the first relationship parameter.

The first relationship parameter may include a corresponding relationship between each second bearer type and the first SL-RLC entity. The first relationship parameter may be a parameter preconfigured by the network device, the relay UE, or a second UE.

The second UE may send the first relationship parameter to the network device or the relay UE, and then the network device or the relay UE may forward the first relationship parameter to the first UE.

In some embodiments, the first UE may receive the above first relationship parameter sent by the relay UE via one or more of a sidelink RRC message, a sidelink MAC CE, and SCI. The sidelink RRC message may be a sidelink system message, or a terminal-dedicated sidelink RRC message, such as, a sidelink RRC reconfiguration message.

In other embodiments, the first UE may receive the above first relationship parameter sent by the network device via one or more of an RRC message, an MAC CE, and downlink control information (DCI). The RRC message may be a system message, or a terminal-dedicated RRC message, such as, an RRC reconfiguration message.

In other embodiments, the first UE may take a first preset corresponding relationship as the first corresponding relationship.

The first preset corresponding relationship may be a corresponding relationship specified in a protocol. For example, it may be specified in the protocol that an SL SRB corresponds to a specific SL-RLC (e.g. Sl-rlc0). The network device, the first UE, the second UE, and the relay UE may set the same first preset corresponding relationship.

In other embodiments, the first UE may take the first preset corresponding relationship as the first corresponding relationship when not receiving the first relationship parameter sent by the network device or the relay UE; and determine the first relationship parameter as the first corresponding relationship when receiving the first relationship parameter sent by the network device or the relay UE.

In another implementation of the above S603, a first preset SL-RLC entity may be taken as the first SL-RLC entity in the case that the second bearer type is the second preset bearer type.

The second preset bearer type may be the same as or different from the above first preset bearer type. The second preset bearer type may include a preset SRB and/or a preset DRB. For example, the second bearer type may be the SL SRB0, the SL SRB1, the SL SRB2, or the SL SRB3.

For example, in the case that the second preset bearer type is the SL SRB0, the first preset SL-RLC entity may be an SL-RLCO. For another example, in the case that the second preset bearer type is the SL SRB1, the first preset SL-RLC entity may be the SL-RLCO.

In some embodiments, the first preset SL-RLC entity may be taken as the first SL-RLC entity in the case that the second bearer type is the second preset bearer type; and a first UE identifier and/or a second UE identifier may be taken as the piece of first data identifier information in the case that the piece of first data identifier information do not include a radio bearer identifier or the radio bearer identifier is set as a preset bearer identifier (for example, all bits are 0 or all bits are 1).

In this way, after the first PDU is received, the relay UE may determine the above second bearer type as the second preset bearer type based on the first preset SL-RLC entity corresponding to the first PDU, to obtain the radio bearer identifier; and generate a piece of second data identifier information based on the radio bearer identifier (the piece of second data identifier information may bear the radio bearer identifier and the first UE identifier, or the piece of second data identifier information may bear the radio bearer identifier and the second UE identifier, or the piece of second data identifier information may bear the radio bearer identifier, the first UE identifier and the second UE identifier), and send the sidelink data to the second UE based on the piece of first data identifier information.

In this way, data transmission may be performed by a specific SL-RLC entity for a specific bearer.

FIG. 7 is a flow chart illustrating a method for transmitting data according to an exemplary embodiment. The method may be applied to a relay UE in the above communication system. As illustrated in FIG. 7, the method may include the following.

At S701, the relay UE receives a first PDU sent by a first UE.

The first PDU includes sidelink data and at least one piece of first data identifier information. The piece of first data identifier information is information determined by the first UE from multiple pieces of pending data identifier information.

At S702, the relay UE sends the sidelink data to a second UE based on the piece of first data identifier information in the first PDU.

With the above method, the relay UE may receive the first PDU sent by the first UE, and send the sidelink data to the second UE based on the piece of first data identifier information in the first PDU. The first PDU includes the sidelink data and the at least one piece of first data identifier information, and the piece of first data identifier information is the information determined by the first UE from the multiple pieces of pending data identifier information. In this way, the relay UE may flexibly forward data based on the piece of first data identifier information, thus meeting the requirements of the U2U relay communication in different scenarios.

In some embodiments, the pending data identifier information includes one or more of following identifiers:

Identifier 1: a first UE identifier of the first UE.

The first UE identifier may be a temporary identifier or a local identifier of the first UE, and may be used to uniquely identify one UE in one or more UEs connected to the relay UE.

Identifier 2: a second UE identifier of the second UE.

Similarly, the second UE identifier may be a temporary identifier or a local identifier of the second UE, and may be used to uniquely identify one UE in one or more UEs connected to the relay UE.

Identifier 3: a radio bearer identifier corresponding to the sidelink data.

For example, the radio bearer identifier may be used to represent a radio bearer which the sidelink data comes from. The radio bearer may include an SRB and a DRB.

In some embodiments, the first UE identifier and the second UE identifier may be assigned by the relay UE, and the relay UE may send an identifier parameter to the first UE. The identifier parameter may include the first UE identifier and/or the second UE identifier above. For example:
after the relay UE assigns the first UE identifier to the first UE, the relay UE may send the first UE identifier and/or the second UE identifier to the first UE.

After the relay UE assigns the second UE identifier to the second UE, the relay UE may also send the second UE identifier to the first UE.

After the relay UE assigns the first UE identifier to the first UE and assigns the second UE identifier to the second UE, the relay UE may send the first UE identifier and the second UE identifier to the first UE.

In this way, the relay UE may notify the first UE identifier and the second UE identifier to the first UE, and may also notify the first UE identifier and the second UE identifier to the second UE, such that the first UE and the second UE may perform the U2U relay communication by the relay UE.

In some embodiments of the disclosure, the first PDU may be an SRAP PDU. The first PDU may include SRAP header information and the sidelink data, and the SRAP header information may include the piece of first data identifier information. The first PDU may be in one or more formats, and the SRAP header information of the first PDU in different formats may include different types of first data identifier information.

FIG. 8 is a flow chart illustrating a method for transmitting data according to an exemplary embodiment. As illustrated in FIG. 8, the method may include steps S801 to S804.

At S801, a relay UE determines a first indication parameter.

In some embodiments, the first indication parameter is used to indicate a first UE to determine a piece of first data identifier information based on the first indication parameter. For example, the first UE may determine at least one piece of first data identifier information from multiple pieces of pending data identifier information based on the first indication parameter. The piece of first data identifier information may include one or more of the first UE identifier, the second UE identifier and the radio bearer identifier above.

Different first indication parameters may represent that the piece of first data identifier information is combined by different identifiers.

For example, in the case that the first indication parameter is a first preset value, the first UE identifier above may be taken as the piece of first data identifier information; or,
in the case that the first indication parameter is a second preset value, the second UE identifier above may be taken as the piece of first data identifier information; or,
in the case that the first indication parameter is a third preset value, the radio bearer identifier above may be taken as the piece of first data identifier information; or,
in the case that the first indication parameter is a fourth preset value, the first UE identifier and the second UE identifier above may be taken as the piece of first data identifier information; or,
in the case that the first indication parameter is a fifth preset value, the first UE identifier and the radio bearer identifier above may be taken as the piece of first data identifier information; or,
in the case that the first indication parameter is a sixth preset value, the second UE identifier and the radio bearer identifier above may be taken as the piece of first data identifier information; or,
in the case that the first indication parameter is a seventh preset value, the first UE identifier, the second UE identifier and the radio bearer identifier above may be taken as the piece of first data identifier information.

In some embodiments, in the case that the relay UE only provides a relay service for the first UE and the second UE, a second indication parameter may be taken as the first indication parameter. The second indication parameter is used to indicate that the second UE identifier is not included in the piece of first data identifier information.

At S802, the relay UE sends a first message to a first UE.

In some embodiments, the first message may include the first indication parameter.

In another embodiment, the first message may include the first indication parameter and a pending UE identifier. The pending UE identifier may be used to indicate the first UE to determine the piece of first data identifier information based on the first indication parameter in the case that it is determined that the second UE identifier of the second UE receiving the sidelink data is the same as the pending UE identifier.

In some embodiments, the first UE may include one or more of a sidelink RRC message, a sidelink MAC CE, and SCI. The sidelink RRC message may be a sidelink system message, or a terminal-dedicated sidelink RRC message, such as a sidelink RRC reconfiguration message.

At S803, the relay UE receives a first PDU sent by the first UE.

The first PDU includes sidelink data and at least one piece of first data identifier information.

At S804, the relay UE sends the sidelink data to a second UE based on the piece of first data identifier information in the first PDU.

In this way, the relay UE may send the first indication parameter to the first UE, such that the first UE may determine the piece of first data identifier information based on the first indication parameter, thus completing the U2U communication.

In some embodiments of the disclosure, the relay UE may send the sidelink data to the second UE in the following way.

First, the second UE identifier is determined based on the piece of first data identifier information in the first PDU.

In some embodiments, in the case that the piece of first data identifier information includes the second UE identifier, the second UE identifier may be obtained directly.

In some embodiments, in the case that the piece of first data identifier information does not include the second UE identifier, the second UE identifier may be determined based on the first UE identifier and/or the radio bearer identifier in the piece of first data identifier information. For example, the relay UE may establish a corresponding relationship between the first UE identifier and the second UE identifier in the case that the first UE and the second UE perform U2U communication with each other by the relay UE; and determine the second UE identifier corresponding to the first UE identifier based on the corresponding relationship.

Second, the sidelink data is sent to the second UE based on the second UE identifier.

In some embodiments, the second UE identifier may be a local identifier. In this step, the relay UE may determine a sidelink layer 2 (L2) identifier (ID) of the second UE corresponding to the second UE identifier, and send the sidelink data to the second UE based on the sidelink L2 ID.

The relay UE may store a corresponding relationship between the second UE identifier and the sidelink L2 ID of the second UE, that is, bind the second UE identifier of the second UE with the sidelink L2 ID of the second UE.

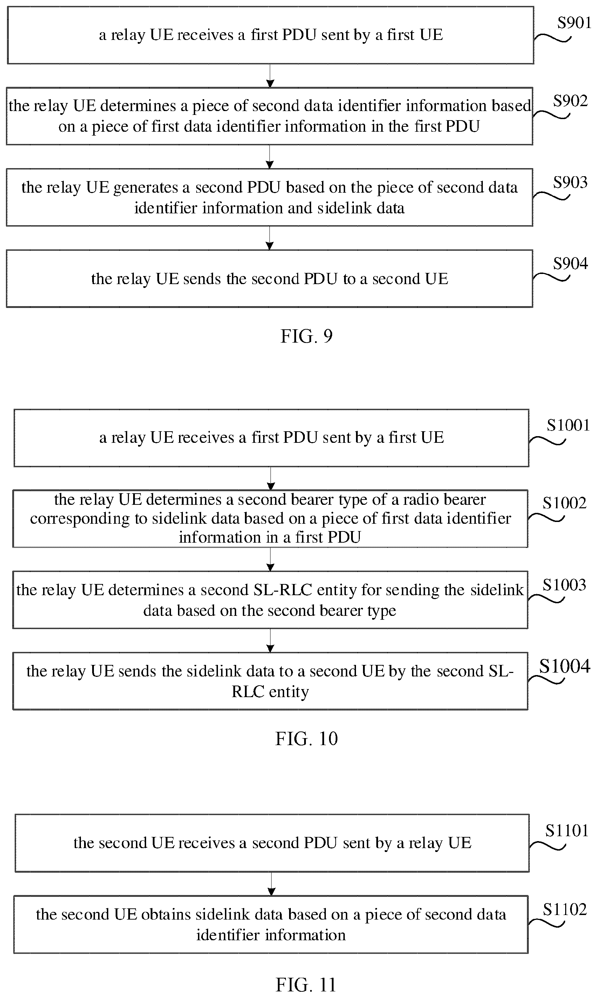

FIG. 9 is a flow chart illustrating a method for transmitting data according to an exemplary embodiment. As illustrated in FIG. 9, the method may include the following.

At S901, a relay UE receives a first PDU sent by a first UE.

At S902, the relay UE determines a piece of second data identifier information based on a piece of first data identifier information in the first PDU.

At S903, the relay UE generates a second PDU based on a piece of second data identifier information and sidelink data.

The second PDU may carry a piece of second data identifier information and the sidelink data.

In some embodiments, the second PDU may be an SRAP PDU. The second PDU may include SRAP header information and the sidelink data, and the SRAP header information may include the second data identifier information. A piece of second data identifier information may include one or more of a first UE identifier, a second UE identifier and a radio bearer identifier.

It should be noted that there may be one or more formats of the second PDU, and the SRAP header information of the second PDU in different formats may include different types of second data identifier information.

At S904, the relay UE sends the second PDU to a second UE.

The way that the relay UE determines a piece of second data identifier information based on the piece of first data identifier information may include one or more of the following.

Way 1: In the case that the piece of first data identifier information includes the radio bearer identifier, the first UE identifier and the second UE identifier, the piece of first data identifier information may be taken as the second data identifier information. For example, the radio bearer identifier, the first UE identifier and the second UE identifier may be carried in the second data identifier information.

Way 2: In the case that the piece of first data identifier information includes the radio bearer identifier, a piece of second data identifier information may be generated based on the radio bearer identifier and the first UE identifier of the first UE. For example, the radio bearer identifier and the first UE identifier may be carried in the second data identifier information.

Way 3: In the case that the piece of first data identifier information includes the radio bearer identifier and the second UE identifier, a piece of second data identifier information may be generated based on the radio bearer identifier and the first UE identifier. For example, the radio bearer identifier and the second UE identifier may be carried in the second data identifier information.

Way 4: In the case that the piece of first data identifier information includes the radio bearer identifier and the second UE identifier, a piece of second data identifier information may be generated based on the radio bearer identifier, the second UE identifier and the first UE identifier. For example, the radio bearer identifier, the first UE identifier and the second UE identifier may be carried in the second data identifier information.

Way 5: In the case that the piece of first data identifier information includes the first UE identifier, a piece of second data identifier information may be generated based on the first UE identifier and the radio bearer identifier corresponding to the sidelink data. For example, the radio bearer identifier and the first UE identifier may be carried in the second data identifier information.

Way 6: In the case that the piece of first data identifier information includes the first UE identifier and the second UE identifier, a piece of second data identifier information may be generated based on the first UE identifier and the radio bearer identifier corresponding to the sidelink data. For example, the radio bearer identifier and the first UE identifier may be carried in the second data identifier information.

Way 7: In the case that the piece of first data identifier information includes the second UE identifier, a piece of second data identifier information may be generated based on the radio bearer identifier corresponding to the sidelink data and the first UE identifier. For example, the radio bearer identifier and the first UE identifier may be carried in the second data identifier information.

In this way, the relay UE may employ any one of the above ways to determine a piece of second data identifier information based on the piece of first data identifier information, generate the second PDU based on a piece of second data identifier information and the sidelink data, and send the second PDU to the second UE, thus realizing a flexible U2U communication.

In some embodiments of the disclosure, the method for transmitting data may include the following.

First, the relay UE determines a first relationship parameter corresponding to the first UE.

Then, the relay UE sends the first relationship parameter to the first UE.

The first relationship parameter is used to indicate the first UE to determine a first corresponding relationship, to determine a first SL-RLC entity corresponding to a second bearer type of sidelink data to be sent based on the first corresponding relationship, and to send the sidelink data to the relay UE by the first SL-RLC entity.

The second bearer type may be a radio bearer type that sends the sidelink data. The second bearer type may include an SRB and/or a DRB. For example, the second bearer type may include one or more of an SL SRB0, an SL SRB1, an SL SRB2, an SL SRB3, and the DRB.

In some embodiments, the relay UE may receive the first relationship parameter sent by a network device or the second UE to the relay UE.

In another embodiment, the relay UE may take a first preset relationship parameter as a first corresponding parameter. The first preset relationship parameter may be a parameter preconfigured by the relay UE.

In this way, the relay UE may indicate the first UE by the first preset relationship parameter to determine the first SL-RLC entity for sending the first PDU based on a second bearer type of a radio bearer corresponding to the sidelink data, and send the first PDU to the relay UE by the first SL-RLC entity, thus meeting the requirement of reliability or security of data transmission.

FIG. 10 is a flow chart illustrating a method for transmitting data according to an exemplary embodiment. As illustrated in FIG. 10, the method may include the following.

At S1001, a relay UE receives a first PDU sent by a first UE.

At S1002, the relay UE determines a second bearer type of a radio bearer corresponding to sidelink data based on a piece of first data identifier information in a first PDU.

The second bearer type may be a radio bearer type that sends the sidelink data. The second bearer type may include an SRB and/or a DRB. For example, the second bearer type may include one or more of an SL SRB0, an SL SRB1, an SL SRB2, an SL SRB3, and the DRB.

At S1003, the relay UE determines a second SL-RLC entity for sending the sidelink data based on the second bearer type.

At S1004, the relay UE sends the sidelink data to a second UE by the second SL-RLC entity.

In this way, the relay UE may determine the second SL-RLC entity for sending the second PDU based on the second bearer type of the radio bearer corresponding to the sidelink data, and send the second PDU to the second UE by the second SL-RLC entity, thus meeting the requirement of reliability or security of data transmission.

In an implementation of the above S1003, the relay UE may obtain a second corresponding relationship, and determine the second SL-RLC entity corresponding to the second bearer type based on the second corresponding relationship. The second corresponding relationship includes a corresponding relationship between the second bearer type and the second SL-RLC entity.

In some embodiments, the relay UE may receive a second relationship parameter sent by a network device or the second UE to the relay UE; and determine the second corresponding relationship based on the second relationship parameter.

In other embodiments, the relay UE may take a second preset corresponding relationship as the second corresponding relationship.

The second preset corresponding relationship may be a corresponding relationship specified in a protocol. For example, it may be specified in the protocol that an SL SRB corresponds to a specific SL-RLC (e.g. Sl-rlc0). The network device, the first UE, the second UE, and the relay UE may set the same second preset corresponding relationship.

In other embodiments, the relay UE may take the second preset corresponding relationship as the second corresponding relationship when not receiving the second relationship parameter sent by the network device or the second UE; and determine the second corresponding relationship based on the second relationship parameter after receiving the second relationship parameter sent by the network device or the relay UE.

In another implementation of the above S1003, a second preset SL-RLC entity is taken as the second SL-RLC entity in the case that the second bearer type is a third preset bearer type.

The second preset bearer type may be the same as or different from the first preset bearer type above. The third preset bearer type may be a preset SRB or a preset DRB, for example, the third preset bearer type may be an SL SRB0, an SL SRB1, an SL SRB2, or an SL SRB3.

For example, in the case that the third preset bearer type is the SL SRB0, a second preset SL-RLC entity may be an SL-RLCO. For another example, in the case that the third preset bearer type is the SL SRB1, the second preset SL-RLC entity may be the SL-RLCO.

In this way, the second SL-RLC entity for sending the second PDU may be determined based on the second bearer type by any one of the above ways.

FIG. 11 is a flow chart illustrating a method for transmitting data according to an exemplary embodiment. The method may be applied to a second UE of the above communication system. As illustrated in FIG. 11, the method may include the following.

At S1101, the second UE receives a second PDU sent by a relay UE.

The second PDU includes sidelink data and second data identifier information. A piece of second data identifier information is determined by the relay UE based on a piece of first data identifier information in a first PDU received from a first UE, and the piece of first data identifier information is determined by the first UE from multiple pieces of pending data identifier information.

At S1102, the second UE obtains the sidelink data based on the second data identifier information.

With the above method, the second UE may receive the second PDU and obtain the sidelink data, thus realizing the U2U communication with the first UE.

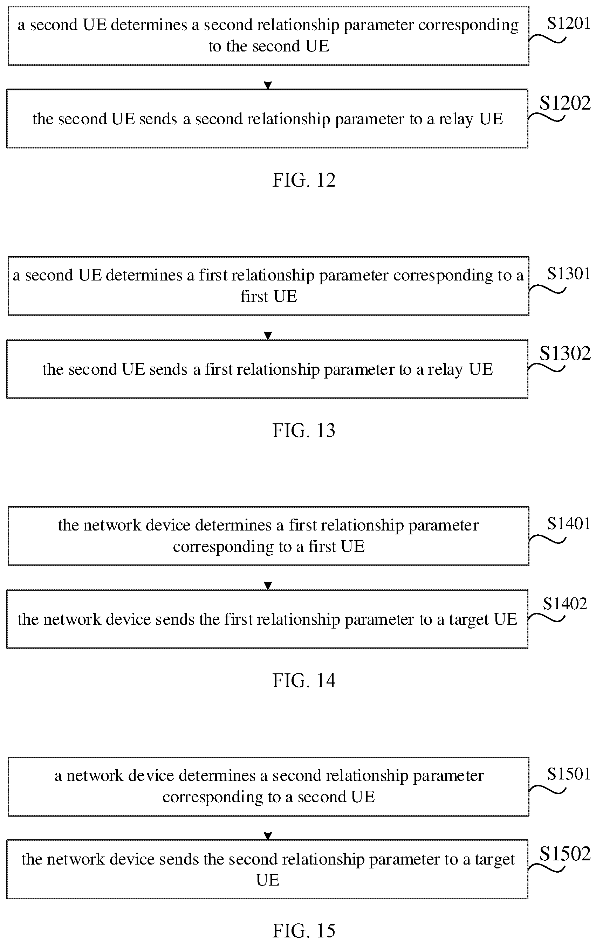

FIG. 12 is a flow chart illustrating a method for transmitting data according to an exemplary embodiment. As illustrated in FIG. 12, the method may include the following.

At S1201, a second UE determines a second relationship parameter corresponding to the second UE.

For example, the second relationship parameter may be a parameter preconfigured by the second UE.

At S1202, the second UE sends a second relationship parameter to a relay UE.

The second relationship parameter is used to indicate the relay UE to determine a second corresponding relationship, and determine a second SL-RLC entity corresponding to a second bearer type based on the second corresponding relationship; and the second corresponding relationship includes a corresponding relationship between the second bearer type and the second SL-RLC entity.

In some embodiments, the second UE may send the above second relationship parameter to the relay UE by one or more of a sidelink RRC message, a sidelink MAC CE, and SCI. The sidelink RRC message may be a sidelink system message, or a terminal-dedicated sidelink RRC message, such as a sidelink RRC reconfiguration message.

It should be noted that, in this embodiment, a detailed implementation that the relay UE and the first UE realize above steps may refer to a description in above embodiments of the disclosure, which is not repeated here.

FIG. 13 is a flow chart illustrating a method for transmitting data according to an exemplary embodiment. As illustrated in FIG. 13, the method may include the following.

At S1301, a second UE determines a first relationship parameter corresponding to a first UE.

For example, the first relationship parameter may be a parameter preconfigured by the second UE.

At S1302, the second UE sends a first relationship parameter to a relay UE.

In this way, the relay UE sends the first relationship parameter to the first UE. The first relationship parameter is used to indicate the first UE to determine a first corresponding relationship, to determine a first SL-RLC entity corresponding to a second bearer type of sidelink data to be sent based on the first corresponding relationship, and to send the sidelink data to the relay UE by the first SL-RLC entity.

In some embodiments, the second UE may send the first relationship parameter to the relay UE by one or more of a sidelink RRC message, a sidelink MAC CE, and SCI. The sidelink RRC message may be a sidelink system message, or a terminal-dedicated sidelink RRC message, such as a sidelink RRC reconfiguration message.

It should be noted that, in this embodiment, a detailed implementation that the relay UE and the first UE realize above steps may refer to a description in above embodiments of the disclosure, which is not repeated here.

FIG. 14 is a flow chart illustrating a method for transmitting data according to an exemplary embodiment. The method may be applied to a network device of the above communication system. As illustrated in FIG. 14, the method may include the following.

At S1401, the network device determines a first relationship parameter corresponding to a first UE.

For example, the first relationship parameter may be a parameter preconfigured by the network device.

At S1402, the network device sends the first relationship parameter to a target UE.

In this way, the first relationship parameter is used to indicate the first UE to determine a first corresponding relationship, to determine a first SL-RLC entity corresponding to a second bearer type of sidelink data to be sent based on the first corresponding relationship, and to send the sidelink data to the relay UE by the first SL-RLC entity. The target UE may include one or more of the first UE, a second UE, and the relay UE.

In some embodiments, network devices may send the above first relationship parameter by one or more of an RRC message, an MAC CE and DCI. The RRC message may include a system message, and the RRC message may also be a terminal-dedicated RRC message, such as an RRC reconfiguration message.

It should be noted that, in this embodiment, a detailed implementation that the relay UE, the first UE and the second UE realize above steps may refer to a description in above embodiments of the disclosure, which is not repeated here.

With the above method, the network device may determine the first relationship parameter and send the first relationship parameter to the target UE.

FIG. 15 is a flow chart illustrating a method for transmitting data according to an exemplary embodiment. As illustrated in FIG. 15, the method may include steps S1501 to S1502.

At S1501, a network device determines a second relationship parameter corresponding to a second UE.

For example, the second relationship parameter may be a parameter preconfigured by the network device.

At S1502, the network device sends the second relationship parameter to a target UE.

The second relationship parameter is used to indicate the relay UE to determine a second corresponding relationship, and to determine a second SL-RLC entity corresponding to a second bearer type based on the second corresponding relationship. The second corresponding relationship includes a corresponding relationship between the second bearer type and the second SL-RLC entity.

In some embodiments, the network device may send the above second relationship parameter by one or more of an RRC message, an MAC CE, and DCI. The sidelink RRC message may be a system message, or a terminal-dedicated RRC message, such as an RRC reconfiguration message.

It should be noted that, in this embodiment, a detailed implementation that the relay UE, the first UE and the second UE realize above steps may refer to a description in above embodiments of the disclosure, which is not repeated here.

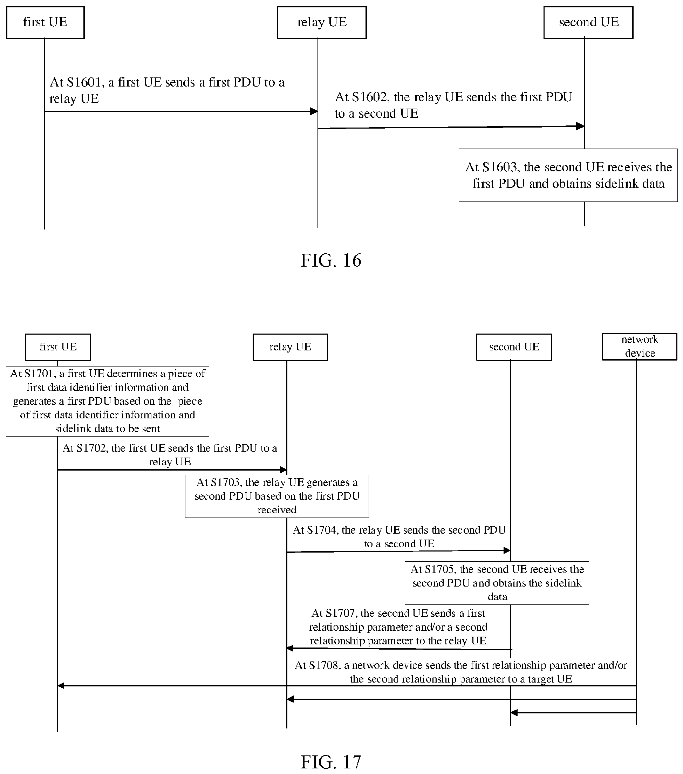

FIG. 16 is a flow chart illustrating a method for transmitting data according to an exemplary embodiment. As illustrated in FIG. 16, the method may include the following.

At S 1601, a first UE sends a first PDU to a relay UE.

In some embodiments, the first PDU may be an SRAP PDU. The first PDU may include SRAP header information and sidelink data, and the SRAP header information may include a piece of first data identifier information. The piece of first data identifier information may include one or more of a first UE identifier, a second UE identifier and a radio bearer identifier.

It should be noted that there may be one or more formats of the first PDU, and the SRAP header information of the first PDU in different formats may include different types of the piece of first data identifier information.

At S 1602, the relay UE sends the first PDU to a second UE.

At S1603, the second UE receives the first PDU and obtains sidelink data.

In some embodiments, the piece of first data identifier information may include the first UE identifier, the second UE identifier, and the radio bearer identifier. The relay UE may directly forward the first PDU to the second UE after receiving the first PDU without making any modifications to the first PDU.

FIG. 17 is a flow chart illustrating a method for transmitting data according to an exemplary embodiment. As illustrated in FIG. 17, the method may include the following.

At S1701, a first UE determines a piece of first data identifier information and generates a first PDU based on the piece of first data identifier information and sidelink data to be sent.

At S 1702, the first UE sends the first PDU to a relay UE.

At S 1703, the relay UE generates a second PDU based on the first PDU received.

In some embodiments, the second PDU may be an SRAP PDU. The second PDU may include SRAP header information and the sidelink data, and the SRAP header information may include second data identifier information. A piece of second data identifier information may include one or more of a first UE identifier, a second UE identifier and a radio bearer identifier.

It should be noted that there may be one or more formats of the second PDU, and the SRAP header information of the second PDU in different formats may include different types of the second data identifier information.

For example, the relay UE may determine the piece of second data identifier information based on the piece of first data identifier information in the first PDU, and generate the second PDU based on the piece of second data identifier information and the sidelink data.

In some embodiments, the piece of first data identifier information may be combined by the second UE identifier and the radio bearer identifier. The relay UE may delete the piece of first data identifier information after receiving the first PDU, and add the second data identifier information, to obtain the second PDU. The piece of second data identifier information may be combined by the first UE identifier and the radio bearer identifier.

In other embodiments, the piece of first data identifier information may be combined by the radio bearer identifier. The relay UE may delete the piece of first data identifier information after receiving the first PDU, and add the second data identifier information, to obtain the second PDU. The piece of second data identifier information may be combined by the first UE identifier and the radio bearer identifier.

In other embodiments, the piece of first data identifier information may be combined by the first UE identifier and/or the second UE identifier, and the sidelink data may be from a specific sidelink bearer (e.g., a second bearer type of a radio bearer corresponding to the sidelink data is a second preset bearer type). The first UE may send the first PDU to the relay UE by a specific RLC entity (e.g., a first preset SL-RLC entity). The relay UE may determine the radio bearer identifier based on the first preset SL-RLC entity after receiving the first PDU. The relay UE may delete the piece of first data identifier information and add the second data identifier information, to obtain the second PDU. The piece of second data identifier information may be combined by the first UE identifier and the radio bearer identifier.

At S 1704, the relay UE sends the second PDU to a second UE.

At S 1705, the second UE receives the second PDU and obtains the sidelink data.

In some embodiments of the disclosure, as illustrated in FIG. 17, the method may also include the following.

At S1707, the second UE sends a first relationship parameter and/or a second relationship parameter to the relay UE.

It should be noted that S 1707 may be executed before or after S1701, or between the S 1701 and the S 1705 at any time, which is not limited in the disclosure.

In some embodiments of the disclosure, as illustrated in FIG. 17, the method may also include the following.

At S1708, a network device sends the first relationship parameter and/or the second relationship parameter to a target UE.

It also should be noted that S 1708 may be executed before or after S 1701, or between the S 1701 and the S 1705 at any time, which is not limited in the disclosure.

With the above method, the first UE may determine at least one piece of first data identifier information from multiple pieces of pending data identifier information; generate the first PDU based on the piece of first data identifier information and the sidelink data to be sent; and send the first PDU to the relay UE, such that the relay UE forwards the sidelink data to the second UE. In this way, the first UE may flexibly determine the piece of first data identifier information, thus meeting the requirements of the U2U relay communication in different scenarios.

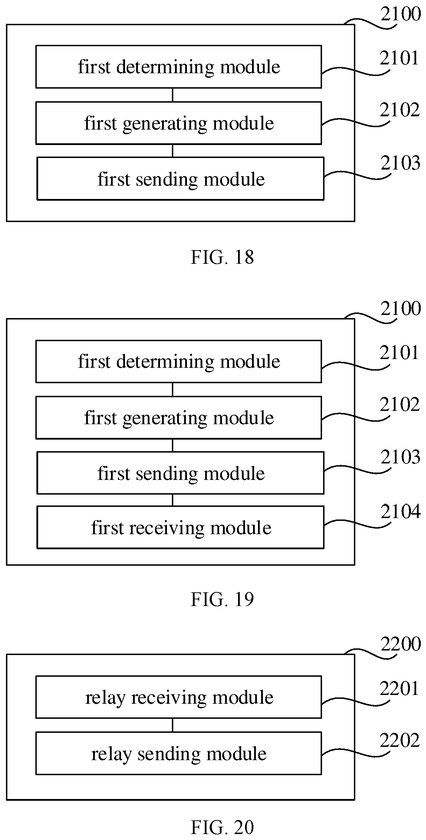

FIG. 18 is a block diagram illustrating an apparatus 2100 for transmitting data according to an exemplary embodiment. The apparatus may be applied to a first UE. As illustrated in FIG. 18, the apparatus 2100 may include:
a first determining module 2101, configured to determine at least one piece of first data identifier information from multiple pieces of pending data identifier information;
a first generating module 2102, configured to generate a first protocol data unit (PDU) based on the piece of first data identifier information and sidelink data to be sent; and
a first sending module 2103, configured to send the first PDU to a relay UE, in which the piece of first data identifier information is used to indicate the relay UE to send the sidelink data to a second UE based on the piece of first data identifier information.

In some embodiments, the pending data identifier information includes one or more of:
a first UE identifier of the first UE;
a second UE identifier of the second UE; or
a radio bearer identifier corresponding to the sidelink data.

In some embodiments, the first determining module 2101 is configured to obtain a first indication parameter in response to receiving a first message sent by the relay UE; the first message including the first indication parameter; and determine the at least one piece of first data identifier information from the multiple pieces of pending data identifier information based on the first indication parameter.

In some embodiments, the first message further includes a pending UE identifier, and the first determining module 2101 is configured to: determine the second UE identifier of the second UE receiving the sidelink data; and determine the at least one piece of first data identifier information from the multiple pieces of pending data identifier information based on the first indication parameter in the case that the second UE identifier is same as the pending UE identifier.

In some embodiments, the first determining module 2101 is configured to determine a first bearer type of a radio bearer corresponding to the sidelink data; and determine the at least one piece of first data identifier information from the multiple pieces of pending data identifier information based on the first bearer type.

In some embodiments, the first determining module 2101 is configured to determine the piece of first data identifier information in the case that the first bearer type is a first preset bearer type; the piece of first data identifier information not including the radio bearer identifier, or the radio bearer identifier being set as a preset bearer identifier.

In some embodiments, the first generating module 2102 is configured to generate the first PDU based on the piece of first data identifier information, the sidelink data and a first identifier in the case that the piece of first data identifier information includes the first UE identifier, in which the first identifier is used to represent that the piece of first data identifier information includes the first UE identifier.

In some embodiments, the first generating module 2102 is configured to generate the first PDU based on the piece of first data identifier information, the sidelink data and a second identifier in the case that the piece of first data identifier information includes the second UE identifier, in which the second identifier is used to represent that the piece of first data identifier information includes the second UE identifier.

FIG. 19 is a block diagram illustrating an apparatus 2100 for transmitting data according to an exemplary embodiment. As illustrated in FIG. 19, the apparatus 2100 may also include:
a first receiving module 2104, configured to, in response to receiving an identifier parameter sent by the relay UE, obtain the first UE identifier and/or the second UE identifier, in which the identifier parameter includes the first UE identifier and/or the second UE identifier.

In some embodiments, the sidelink data is data from a sidelink-data radio bearer (SL-DRB) and/or a sidelink signaling radio bearer (SL SRB).

In some embodiments, the first sending module 2103 is configured to determine a second bearer type of the radio bearer corresponding to the sidelink data; determine a first SL-RLC entity for sending the first PDU based on the second bearer type; and send the first PDU to the relay UE by the first SL-RLC entity.

In some embodiments, the first sending module 2103 is configured to obtain a first corresponding relationship, the first corresponding relationship including a corresponding relationship between the second bearer type and the first SL-RLC entity; and determine the first SL-RLC entity corresponding to the second bearer type based on the first corresponding relationship.

In some embodiments, the first sending module 2103 is configured to receive a first relationship parameter sent by a network device or the relay UE; and determine the first corresponding relationship based on the first relationship parameter.

In some embodiments, the first sending module 2103 is configured to take a first preset corresponding relationship as the first corresponding relationship.

In some embodiments, the first sending module 2103 is configured to take a first preset SL-RLC entity as the first SL-RLC entity in the case that the second bearer type is a second preset bearer type.

FIG. 20 is a block diagram illustrating an apparatus 2200 for transmitting data according to an exemplary embodiment. The apparatus may be applied to a relay UE. As illustrated in FIG. 20, the apparatus 2200 may include:
a relay receiving module 2201, configured to receive a first PDU sent by a first UE, in which the first PDU includes sidelink data and at least one piece of first data identifier information, and the piece of first data identifier information is information determined by the first UE from multiple pieces of pending data identifier information; and
a relay sending module 2202, configured to send the sidelink data to a second UE based on the piece of first data identifier information in the first PDU.

In some embodiments, the pending data identifier information includes one or more of:
a first UE identifier of the first UE;
a second UE identifier of the second UE; or
a radio bearer identifier corresponding to the sidelink data.

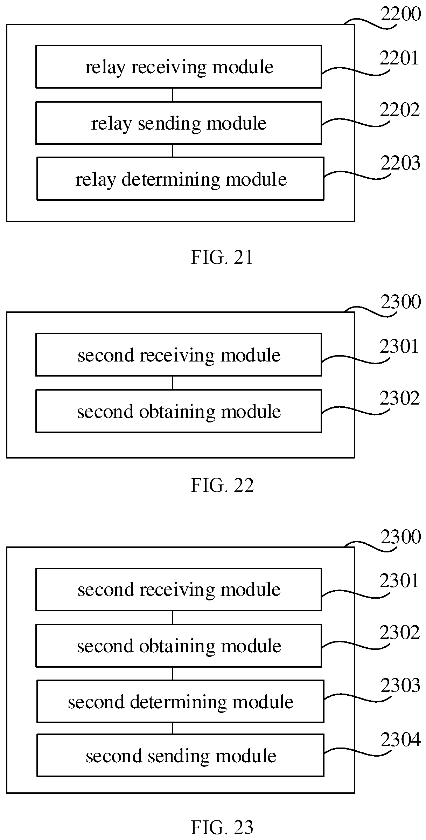

FIG. 21 is a block diagram of an apparatus 2200 for transmitting data according to an exemplary embodiment. As illustrated in FIG. 21, the apparatus 2200 may include:
a relay determining module 2203, configured to determine a first indication parameter; and
a relay sending module 2202, configured to send a first message to the first UE; the first message including the first indication parameter, and the first indication parameter being used to indicate the first UE to determine the at least one piece of first data identifier information from the multiple pieces of pending data identifier information based on the first indication parameter.

In some embodiments, the first message further includes a pending UE identifier, and the pending UE identifier is used to indicate the first UE to determine the piece of first data identifier information based on the first indication parameter in the case that it is determined that the second UE identifier of the second UE receiving the sidelink data is the same as the pending UE identifier.

In some embodiments, the relay determining module 2203 is configured to take a second indication parameter as the first indication parameter in the case that the relay UE only provides a relay service for the first UE and the second UE, in which the second indication parameter is used to indicate that the piece of first data identifier information does not include the second UE identifier.

In some embodiments, the relay sending module 2202 is configured to determine the second UE identifier based on the piece of first data identifier information in the first PDU; and send the sidelink data to the second UE based on the second UE identifier.

In some embodiments, the relay sending module 2202 is configured to determine a layer two identifier of the second UE corresponding to the second UE identifier; and send the sidelink data to the second UE based on the layer two identifier.

In some embodiments, the relay sending module 2202 is configured to send an identifier parameter to the first UE; the identifier parameter including the first UE identifier and/or the second UE identifier.

In some embodiments, the relay sending module 2202 is configured to determine a piece of second data identifier information based on the piece of first data identifier information in the first PDU; generate a second PDU based on the piece of second data identifier information and the sidelink data; and send the second PDU to the second UE.

In some embodiments, the relay sending module 2202 is configured to:
take the piece of first data identifier information as the piece of second data identifier information in the case that the piece of first data identifier information includes the radio bearer identifier, the first UE identifier and the second UE identifier; or,
generate the piece of second data identifier information based on the radio bearer identifier and the first UE identifier of the first UE in the case that the piece of first data identifier information includes the radio bearer identifier; or,
generate the piece of second data identifier information based on the radio bearer identifier and the first UE identifier in the case that the piece of first data identifier information includes the radio bearer identifier and the second UE identifier; or,
generate the piece of second data identifier information based on the radio bearer identifier, the second UE identifier and the first UE identifier in the case that the piece of first data identifier information includes the radio bearer and the second UE identifier; or,
generate the piece of second data identifier information based on the first UE identifier and the radio bearer identifier corresponding to the sidelink data in the case that the piece of first data identifier information includes the first UE identifier; or,
generate the piece of second data identifier information based on the first UE identifier and the radio bearer identifier corresponding to the sidelink data in the case that the piece of first data identifier information includes the first UE identifier and the second UE identifier; or,
generate the piece of second data identifier information based on the radio bearer identifier corresponding to the sidelink data and the first UE identifier in the case that the piece of first data identifier information includes the second UE identifier.

In some embodiments, the relay determining module 2203 is configured to determine a first relationship parameter corresponding to the first UE; and
the relay sending module 2202 is configured to send the first relationship parameter to the first UE; the first relationship parameter being used to indicate the first UE to determine a first corresponding relationship, determine a first SL-RLC entity corresponding to a second bearer type of the sidelink data to be sent based on the first corresponding relationship, and send the sidelink data to the relay UE by the first SL-RLC entity.

In some embodiments, the relay determining module 2203 is configured to receive the first relationship parameter sent by a network device or the second UE to the relay UE.

In some embodiments, the relay determining module 2203 is configured to take a first preset relationship parameter as a first corresponding parameter.

In some embodiments, the relay sending module 2202 is configured to determine a second bearer type of a radio bearer corresponding to the sidelink data based on the piece of first data identifier information in the first PDU; determine a second SL-RLC entity for sending the sidelink data based on the second bearer type; and send the sidelink data to the second UE by the second SL-RLC entity.

In some embodiments, the relay sending module 2202 is configured to obtain a second corresponding relationship; the second corresponding relationship including a corresponding relationship between the second bearer type and the second SL-RLC entity; and determine the second SL-RLC entity corresponding to the second bearer type based on the second corresponding relationship.

In some embodiments, the relay sending module 2202 is configured to receive a second relationship parameter sent by the network device or the second UE to the relay UE; and determine the second corresponding relationship based on the second relationship parameter.

In some embodiments, the relay sending module 2202 is configured to take a second preset corresponding relationship as the second corresponding relationship.

In some embodiments, the relay sending module 2202 is configured to take a second preset SL-RLC entity as the second SL-RLC entity in the case that the second bearer type is a third preset bearer type.

FIG. 22 is a block diagram illustrating an apparatus 2300 for transmitting data according to an exemplary embodiment. The apparatus is applied to a second UE. As illustrated in FIG. 22, the apparatus 2300 may include:
a second receiving module 2301, configured to receive a second PDU sent by a relay UE; the second PDU including sidelink data and second data identifier information, a piece of second data identifier information being determined by the relay UE based on a piece of first data identifier information in a first PDU received from a first UE, and the piece of first data identifier information being determined by the first UE from multiple pieces of pending data identifier information; and
a second obtaining module 2302, configured to obtain the sidelink data based on the second data identifier information.

FIG. 23 is a block diagram illustrating an apparatus 2300 for transmitting data according to an exemplary embodiment. As illustrated in FIG. 23, the apparatus 2300 may include:
a second determining module 2303, configured to determine a second relationship parameter corresponding to the second UE; and
a second sending module 2304, configured to send the second relationship parameter to the relay UE; the second relationship parameter being used to indicate the relay UE to determine a second corresponding relationship, to determine a second SL-RLC entity corresponding to a second bearer type based on the second corresponding relationship and the second corresponding relationship including a corresponding relationship between the second bearer type and the second SL-RLC entity.

In some embodiments, the second determining module 2303 is configured to determine a first relationship parameter corresponding to the first UE; and
a second sending module 2304, configured to send the first relationship parameter to the relay UE, to enable the relay UE to send the first relationship parameter to the first UE; the first relationship parameter being used to indicate the first UE to determine a first corresponding relationship, to determine a first SL-RLC entity corresponding to a second bearer type of the sidelink data to be sent based on the first corresponding relationship, and to send the sidelink data to the relay UE by the first SL-RLC entity.

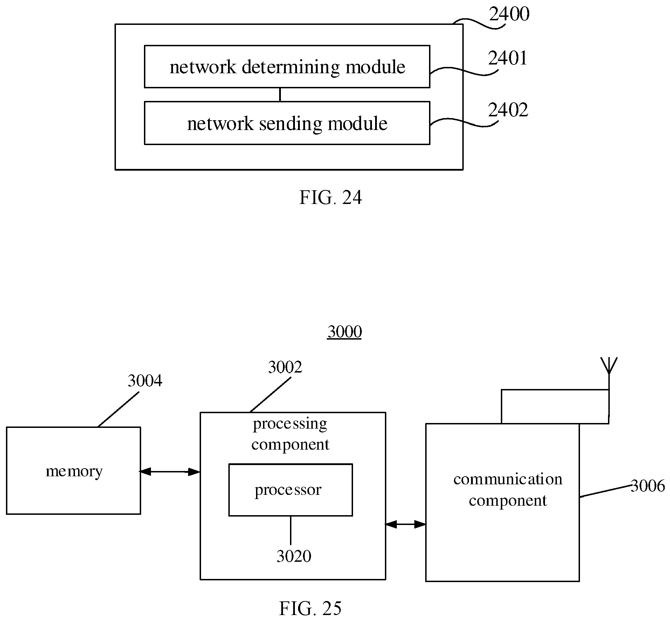

FIG. 24 is a block diagram illustrating an apparatus 2400 for transmitting data according to an exemplary embodiment. The apparatus applied to a network device. As illustrated in FIG. 24, the apparatus 2400 may include:
a network determining module 2401, configured to determine a first relationship parameter corresponding to a first UE; and
a network sending module 2402, configured to send the first relationship parameter to a target UE; the first relationship parameter being used to indicate the first UE to determine a first corresponding relationship, to determine a first SL-RLC entity corresponding to a second bearer type of sidelink data to be sent based on the first corresponding relationship, and to send the sidelink data to a relay UE by the first SL-RLC entity; and the target UE including one or more of the first UE, a second UE and the relay UE.

In some embodiments, the network determining module 2401 is configured to determine a second relationship parameter corresponding to the second UE; and
a network sending module 2402, configured to send the second relationship parameter to the relay UE; the second relationship parameter being used to indicate the relay UE to determine a second corresponding relationship, and to determine a second SL-RLC entity corresponding to a second bearer type based on the second corresponding relationship; and the second corresponding relationship including a corresponding relationship between the second bearer type and the second SL-RLC entity.

With respect to the apparatus in the above embodiments, a detailed implementation that each module performs an operation has been described in detail in the related method embodiments, which is not repeated here.

FIG. 25 is a block diagram illustrating an apparatus for transmitting data according to an exemplary embodiment. The apparatus 3000 for transmitting data may be one UE in the communication system in FIG. 1 (such as the first UE, the second UE or the relay UE in FIG. 1), or a network device in the communication system.

Referring to FIG. 25, the apparatus 3000 may include one or more of the following components: a processing component 3002, a memory 3004, and a communication component 3006.

The processing component 3002 may be configured to control an overall operation of the apparatus 3000, such as operations associated with a display, a telephone call, a data communication, a camera operation, and a recording operation. The processing component 3002 may include one or more processors 3020 to execute instructions to complete all or part of steps of the method for transmitting data above. In addition, the processing component 3002 may include one or more modules to facilitate interactions between the component 3002 and other components. For example, the processing component 3002 may include a multimedia module to facilitate interaction between the multimedia module and the processing component 3002.

The memory 3004 is configured to store various types of data to support an operation on the apparatus 3000. Examples of such data include instructions, contact data, phone book data, a message, a picture, a video, etc. for any application or method used to operate on the apparatus 3000. The memory 3004 may be implemented by any types of volatile or non-volatile memory or a combination of these memories, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The communication component 3006 is configured to facilitate wired or wireless communication between the apparatus 3000 and other devices. The apparatus 3000 may access a wireless network based on a communication standard, such as Wi-Fi, 2G, 3G, 4G, 5G, 6G, NB-IOT, eMTC, etc., or a combination of them. In an exemplary embodiment, the communication component 3006 receives a broadcast signal or broadcast-related information from an external broadcast management system by a broadcast channel. In an exemplary embodiment, the communication component 3006 also includes a near-field communication (NFC) module to facilitate short-range communication. For example, the NFC module may be realized based on a radio frequency identification (RFID) technology, an infrared data association (IrDA) technology, an ultra-wideband (UWB) technology, a bluetooth (BT) technology and other technologies.

In exemplary embodiments, the apparatus 3000 may implement the above method for transmitting data by one or more application specific integrated circuits (ASIC), digital signal processors (DSPs), digital signal processing devices (DSPDs), programmable logic devices (PLDs), field programmable gate arrays (FPGAs), controllers, microcontrollers, microprocessors, or other electronic components.

The apparatus 3000 may be an independent electronic device or a part of an independent electronic device. For example, in an embodiment, the electronic device may be an integrated circuit (IC) or a chip, in which the IC may be a single IC or a collection of ICs. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), etc. The integrated circuit or chip may be configured to execute executable instructions (or codes) to implement the method for transmitting data. The executable instructions may be stored in the integrated circuit or chip, or may be obtained from other apparatuses or devices, for example, the integrated circuit or chip includes a processor, a memory, and an interface for communicating with other devices. The executable instructions may be stored in the processor. The method for transmitting data is realized when the executable instructions are executed by the processor; or, the method for transmitting data is realized when the integrated circuit or chip may receive executable instructions by the interface and transmit the executable instructions to the processor.

In exemplary embodiments, the disclosure also provides a computer readable storage medium, on which computer program instructions are stored. When the computer program instructions are executed by a processor, steps of the method for transmitting data are implemented. For example, the computer readable storage medium may be a non-transitory computer readable storage medium including instructions, such as the memory 3004 including instructions. The instructions may be executed by the processor 3020 of the apparatus 3000 to complete the method for transmitting data. For example, the non- transitory computer readable storage media may be a read-only memory (ROM), a random access memory (RAM), a compact disc read-only memory (CD-ROM), a magnetic tape, a floppy disk, and an optical data storage device.

In another exemplary embodiment, the disclosure also provides a computer program product including a computer program capable of being executed by a programmable device, in which the computer program has a part of codes for executing the method for transmitting data when executed by the programmable device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for transmitting data, applied to a first user equipment (UE), comprising:
determining at least one piece of first data identifier information from a plurality of pieces of pending data identifier information;
generating a first protocol data unit (PDU) based on the piece of first data identifier information and sidelink data to be sent; and
sending the first PDU to a relay UE, wherein the piece of first data identifier information is used to indicate the relay UE to send the sidelink data to a second UE based on the piece of first data identifier information.

2. The method of claim 1, wherein the pending data identifier information comprises one or more of:
a first UE identifier of the first UE;
a second UE identifier of the second UE; or
a radio bearer identifier corresponding to the sidelink data.

3. The method of claim 2, wherein determining the at least one piece of first data identifier information from the plurality pieces of pending data identifier information comprises:
in response to receiving a first message sent by the relay UE, obtaining a first indication parameter; the first message comprising the first indication parameter; and
determining the at least one piece of first data identifier information from the plurality of pieces of pending data identifier information based on the first indication parameter.

4. The method of claim 3, wherein the first message further comprises a pending UE identifier, and determining the at least one piece of first data identifier information from the plurality of pieces of pending data identifier information based on the first indication parameter comprises:
determining the second UE identifier of the second UE receiving the sidelink data; and
determining the at least one piece of first data identifier information from the plurality of pieces of pending data identifier information based on the first indication parameter in the case that the second UE identifier is same as the pending UE identifier.

5. The method of claim 2, wherein determining the at least one piece of first data identifier information from the plurality of pieces of pending data identifier information comprises:
determining a first bearer type of a radio bearer corresponding to the sidelink data; and
determining the at least one piece of first data identifier information from the plurality of pieces of pending data identifier information based on the first bearer type.

6. The method of claim 5, wherein determining the at least one piece of first data identifier information from the plurality of pieces of pending data identifier information based on the first bearer type comprises:
determining the piece of first data identifier information in the case that the first bearer type is a first preset bearer type; the piece of first data identifier information not comprising the radio bearer identifier, or the radio bearer identifier being set as a preset bearer identifier.

7. The method of claim 2, wherein generating the first PDU based on the piece of first data identifier information and the sidelink data to be sent comprises:
generating the first PDU based on the piece of first data identifier information, the sidelink data and a first identifier in the case that the piece of first data identifier information comprises the first UE identifier, wherein the first identifier is used to represent that the piece of first data identifier information comprises the first UE identifier.

8. The method of claim 2, wherein generating the first PDU based on the piece of first data identifier information and the sidelink data to be sent comprises:
generating the first PDU based on the piece of first data identifier information, the sidelink data and a second identifier in the case that the piece of first data identifier information comprises the second UE identifier, wherein the second identifier is used to represent that the piece of first data identifier information comprises the second UE identifier.

9. The method of claim 2, further comprising:
in response to receiving an identifier parameter sent by the relay UE, obtaining the first UE identifier and/or the second UE identifier, wherein the identifier parameter comprises the first UE identifier and/or the second UE identifier.

10. The method of claim 1, wherein the sidelink data is data from a sidelink-data radio bearer (SL-DRB) and/or a sidelink signaling radio bearer (SL SRB).

11. The method of any one of claims 1 to 10, wherein sending the first PDU to the relay UE comprises:
determining a second bearer type of the radio bearer corresponding to the sidelink data;
determining a first sidelink-radio link control (SL-RLC) entity for sending the first PDU based on the second bearer type; and
sending the first PDU to the relay UE by the first SL-RLC entity.

12. The method of claim 11, wherein determining the first SL-RLC entity for sending the first PDU based on the second bearer type comprises:
obtaining a first corresponding relationship, the first corresponding relationship comprising a corresponding relationship between the second bearer type and the first SL-RLC entity; and
determining the first SL-RLC entity corresponding to the second bearer type based on the first corresponding relationship.

13. The method of claim 12, wherein obtaining the first corresponding relationship comprises:
receiving a first relationship parameter sent by a network device or the relay UE; and determining the first corresponding relationship based on the first relationship parameter.

14. The method of claim 12, wherein obtaining the first corresponding relationship comprises:
taking a first preset corresponding relationship as the first corresponding relationship.

15. The method of claim 13, wherein determining the first SL-RLC entity for sending the first PDU based on the second bearer type comprises:
taking a first preset SL-RLC entity as the first SL-RLC entity in the case that the second bearer type is a second preset bearer type.

16. A method for transmitting data, applied to a relay user equipment (UE), comprising:
receiving a first protocol data unit (PDU) sent by a first UE, wherein the first PDU comprises sidelink data and at least one piece of first data identifier information; and the piece of first data identifier information is information determined by the first UE from a plurality of pieces of pending data identifier information; and
sending the sidelink data to a second UE based on the piece of first data identifier information in the first PDU.

17. The method of claim 16, wherein the pending data identifier information comprises one or more of:
a first UE identifier of the first UE;
a second UE identifier of the second UE; or
a radio bearer identifier corresponding to the sidelink data.

18. The method of claim 17, further comprising:
determining a first indication parameter; and
sending a first message to the first UE; the first message comprising the first indication parameter, and the first indication parameter being used to indicate the first UE to determine the at least one piece of first data identifier information from the plurality of pieces of pending data identifier information based on the first indication parameter.

19. The method of claim 18, wherein the first message further comprises a pending UE identifier, and the pending UE identifier is used to indicate the first UE to determine the piece of first data identifier information based on the first indication parameter in the case that it is determined that the second UE identifier of the second UE receiving the sidelink data is the same as the pending UE identifier.

20. The method of claim 18, wherein determining the first indication parameter comprises:
taking a second indication parameter as the first indication parameter in the case that the relay UE only provides a relay service for the first UE and the second UE, wherein the second indication parameter is used to indicate that the piece of first data identifier information does not comprise the second UE identifier.

21. The method of claim 17, wherein sending the sidelink data to the second UE based on the piece of first data identifier information in the first PDU comprises:
determining the second UE identifier based on the piece of first data identifier information in the first PDU; and
sending the sidelink data to the second UE based on the second UE identifier.

22. The method of claim 21, wherein sending the sidelink data to the second UE based on the second UE identifier comprises:
determining a layer two identifier of the second UE corresponding to the second UE identifier; and
sending the sidelink data to the second UE based on the layer two identifier.

23. The method of claim 17, further comprising:
sending an identifier parameter to the first UE; the identifier parameter comprising the first UE identifier and/or the second UE identifier.

24. The method of claim 17, wherein sending the sidelink data to the second UE based on the piece of first data identifier information in the first PDU comprises:
determining a piece of second data identifier information based on the piece of first data identifier information in the first PDU;
generating a second PDU based on the piece of second data identifier information and the sidelink data; and
sending the second PDU to the second UE.

25. The method of claim 24, wherein determining the piece of second data identifier information based on the piece of first data identifier information in the first PDU comprises:
taking the piece of first data identifier information as the piece of second data identifier information in the case that the piece of first data identifier information comprises the radio bearer identifier, the first UE identifier and the second UE identifier; or,
generating the piece of second data identifier information based on the radio bearer identifier and the first UE identifier of the first UE in the case that the piece of first data identifier information comprises the radio bearer identifier; or,
generating the piece of second data identifier information based on the radio bearer identifier and the first UE identifier in the case that the piece of first data identifier information comprises the radio bearer identifier and the second UE identifier; or,
generating the piece of second data identifier information based on the radio bearer identifier, the second UE identifier and the first UE identifier in the case that the piece of first data identifier information comprises the radio bearer and the second UE identifier; or,
generating the piece of second data identifier information based on the first UE identifier and the radio bearer identifier corresponding to the sidelink data in the case that the piece of first data identifier information comprises the first UE identifier; or,
generating the piece of second data identifier information based on the first UE identifier and the radio bearer identifier corresponding to the sidelink data in the case that the piece of first data identifier information comprises the first UE identifier and the second UE identifier; or,
generating the piece of second data identifier information based on the radio bearer identifier corresponding to the sidelink data and the first UE identifier in the case that the piece of first data identifier information comprises the second UE identifier.

26. The method of claim 16, further comprising:
determining a first relationship parameter corresponding to the first UE; and
sending the first relationship parameter to the first UE; the first relationship parameter being used to indicate the first UE to determine a first corresponding relationship, to determine a first sidelink-radio link control (SL-RLC) entity corresponding to a second bearer type of the sidelink data to be sent based on the first corresponding relationship, and to send the sidelink data to the relay UE by the first SL-RLC entity.

27. The method of claim 26, wherein determining the first relationship parameter corresponding to the first UE comprises:
receiving the first relationship parameter sent by a network device or the second UE to the relay UE.

28. The method of claim 26, wherein determining the first relationship parameter corresponding to the first UE comprises:
taking a first preset relationship parameter as a first corresponding parameter.

29. The method of any one of claims 16 to 28, wherein sending the sidelink data to the second UE based on the piece of first data identifier information in the first PDU comprises:
determining a second bearer type of a radio bearer corresponding to the sidelink data based on the piece of first data identifier information in the first PDU;
determining a second SL-RLC entity for sending the sidelink data based on the second bearer type; and
sending the sidelink data to the second UE by the second SL-RLC entity.

30. The method of claim 29, wherein determining the second SL-RLC entity for sending the sidelink data based on the second bearer type comprises:
obtaining a second corresponding relationship; the second corresponding relationship comprising a corresponding relationship between the second bearer type and the second SL-RLC entity; and determining the second SL-RLC entity corresponding to the second bearer type based on the second corresponding relationship.

31. The method of claim 30, wherein obtaining the second corresponding relationship comprises: receiving a second relationship parameter sent by the network device or the second UE to the relay UE; and determining the second corresponding relationship based on the second relationship parameter.

32. The method of claim 30, wherein obtaining the second corresponding relationship comprises: taking a second preset corresponding relationship as the second corresponding relationship.

33. The method of claim 29, wherein determining the second SL-RLC entity for sending the sidelink data based on the second bearer type comprises:
taking a second preset SL-RLC entity as the second SL-RLC entity in the case that the second bearer type is a third preset bearer type.

34. A method for transmitting data, applied to a second user equipment (UE), comprising:
receiving a second protocol data unit (PDU) sent by a relay UE; the second PDU comprising sidelink data and second data identifier information, a piece of second data identifier information being determined by the relay UE based on a piece of first data identifier information in a first PDU received from a first UE, and the piece of first data identifier information being information determined by the first UE from a plurality of pieces of pending data identifier information; and
obtaining the sidelink data based on the second data identifier information.

35. The method of claim 34, further comprising:
determining a second relationship parameter corresponding to the second UE; and
sending the second relationship parameter to the relay UE; the second relationship parameter being used to indicate the relay UE to determine a second corresponding relationship, and to determine a second sidelink-radio link control (SL-RLC) entity corresponding to a second bearer type based on the second corresponding relationship; and the second corresponding relationship comprising a corresponding relationship between the second bearer type and the second SL-RLC entity.

36. The method of claim 34, further comprising:
determining a first relationship parameter corresponding to the first UE; and
sending the first relationship parameter to the relay UE, to enable the relay UE to send the first relationship parameter to the first UE; the first relationship parameter being used to indicate the first UE to determine a first corresponding relationship, to determine a first SL-RLC entity corresponding to a second bearer type of the sidelink data to be sent based on the first corresponding relationship, and to send the sidelink data to the relay UE by the first SL-RLC entity.

37. A method for transmitting data, applied to a network device, comprising:
determining a first relationship parameter corresponding to a first user equipment (UE); and
sending the first relationship parameter to a target UE; the first relationship parameter being used to indicate the first UE to determine a first corresponding relationship, to determine a first sidelink-radio link control (SL-RLC) entity corresponding to a second bearer type of sidelink data to be sent based on the first corresponding relationship, and to send the sidelink data to a relay UE by the first SL-RLC entity; and the target UE comprising one or more of the first UE, a second UE and the relay UE.

38. The method of claim 37, further comprising:
determining a second relationship parameter corresponding to the second UE; and
sending the second relationship parameter to the relay UE; the second relationship parameter being used to indicate the relay UE to determine a second corresponding relationship, and to determine a second SL-RLC entity corresponding to the second bearer type based on the second corresponding relationship; and the second corresponding relationship comprising a corresponding relationship between the second bearer type and the second SL-RLC entity.

39. An apparatus for transmitting data, applied to a first user equipment (UE), comprising:
a first determining module, configured to determine at least one piece of first data identifier information from a plurality of pieces of pending data identifier information;
a first generating module, configured to generate a first protocol data unit (PDU) based on the piece of first data identifier information and sidelink data to be sent; and
a first sending module, configured to send the first PDU to a relay UE, wherein the piece of first data identifier information is used to indicate the relay UE to send the sidelink data to a second UE based on the piece of first data identifier information.

40. An apparatus for transmitting data, applied to a relay user equipment (UE), comprising:
a relay receiving module, configured to receive a first protocol data unit (PDU) sent by a first UE, wherein the first PDU comprises sidelink data and at least one piece of first data identifier information, and the piece of first data identifier information is information determined by the first UE from a plurality of pieces of pending data identifier information; and
a relay sending module, configured to send the sidelink data to a second UE based on the piece of first data identifier information in the first PDU.

41. An apparatus for transmitting data, applied to a second user equipment (UE), comprising:
a second receiving module, configured to receive a second protocol data unit (PDU) sent by a relay UE; the second PDU comprising sidelink data and second data identifier information, a piece of second data identifier information being determined by the relay UE based on a piece of first data identifier information in a first PDU received from a first UE, and the piece of first data identifier information being information determined by the first UE from a plurality of pieces of pending data identifier information; and
a second obtaining module, configured to obtain the sidelink data based on the second data identifier information.

42. An apparatus for transmitting data, applied to a network device, comprising:
a network determining module, configured to determine a first relationship parameter corresponding to a first user equipment (UE); and
a network sending module, configured to send the first relationship parameter to a target UE; the first relationship parameter being used to indicate the first UE to determine a first corresponding relationship, to determine a first sidelink-radio link control (SL-RLC) entity corresponding to a second bearer type of sidelink data to be sent based on the first corresponding relationship, and to send the sidelink data to a relay UE by the first SL-RLC entity; and the target UE comprising one or more of the first UE, a second UE and the relay UE.

43. A device for transmitting data, comprising:
a processor; and
a memory for storing instructions executable by the processor,
wherein the processor is configured to implement steps of the method of any one of claims 1 to 15, or the processor is configured to implement steps of the method of any one of claims 16 to 33, or the processor is configured to implement steps of the method of any one of claims 34 to 36, or the processor is configured to implement of the method of any one of claims 37 to 38.

44. A computer readable storage medium, on which computer program instructions are stored, wherein when the computer program instructions are executed by a processor, steps of the method of any one of claims 1 to 15 are implemented, or steps of the method of any one of claims 16 to 33 are implemented, or steps of the method of any one of claims 34 to 36 are implemented, or steps of the method of any one of claims 37 to 38 are implemented.

45. A chip, comprising a processor and an interface, wherein the processor is configured to read instructions to execute steps of the method of any one of claims 1 to 15, or the processor is configured to read instructions to execute steps of the method of any one of claims 16 to 33, or the processor is configured to read instructions to execute steps of the method of any one of claims 34 to 36, or the processor is configured to read instructions to execute steps of the method of any one of claims 37 to 38.
